# EUROPÄISCHE PATENTANMELDUNG

(11) **EP 4 564 011 A1**
(43) Veröffentlichungstag der Anmeldung: **04.06.2025**
(21) Anmeldenummer: 23213083.1
(22) Anmeldetag: 29.11.2023
(51) Int. Cl.: G01N 35/10, B01L 3/02

(54) **VORRICHTUNG UND VERFAHREN ZUR PARALLELEN AUSGABE VON FLÜSSIGKEITEN AUS EINER MEHRZAHL VON PROBENGEFÄSSEN**

(71) Anmelder: Hahn-Schickard-Gesellschaft für angewandte Forschung e. V., 70569 Stuttgart (DE); Albert-Ludwigs-Universität Freiburg, 79098 Freiburg (DE)
(72) Erfinder: Schiedel, Larissa, 79211 Denzlingen (DE); Kartmann, Sabrina, 79104 Freiburg (DE); Boesenberg, Moritz, 79108 Freiburg (DE)
(74) Vertreter: Stöckeler, Ferdinand

(57) **Zusammenfassung**

Vorrichtung zur parallelen Ausgabe von Flüssigkeiten aus einer Mehrzahl von Probengefäßen, umfassend eine Halterung zur Aufnahme und Positionierung der Mehrzahl von Probengefäßen; und eine Fluidextraktionseinheit, die ausgebildet ist, um parallel in jedem der Mehrzahl von Probengefäßen einen Kolben zu betätigen, um eine Flüssigkeit aus dem jeweiligen Probengefäß auszugeben.

## Beschreibung

Ausführungsbeispiele gemäß der Erfindung beziehen sich auf eine Vorrichtung und ein Verfahren zur parallelen Ausgabe von Flüssigkeiten aus einer Mehrzahl von Probengefäßen, z. B. einer parallelen Probeneingabe aus Probengefäßen mit Kolben.

Im Bereich der patientennahen Diagnostik kommen vermehrt vollautomatisierte Laborgeräte zum Einsatz [1]. Automatisiert ist neben der eigentlichen Analysemethode zunehmend auch die ihr vorangestellte Probenaufbereitung [2]. Der erste Schritt einer automatisierten Probenaufbereitung ist stets der Transfer bzw. die Eingabe der flüssigen Patientenproben (z. B. Urin, Blut oder Sputum) aus einem Probengefäß in das entsprechende Zielgefäß im Gerät. Die vorliegende Erfindung beschreibt eine Methode, mit der die genannte Probeneingabe aus Probengefäßen mit Kolben parallelisiert durchgeführt werden kann. Die Erfindung stellt damit eine Alternative zum Probentransfer mittels Pipettieren dar, die insbesondere die automatisierte Probenaufbereitung für Probenvolumina größer als 1 ml durch den hohen Parallelisierungsgrad verbessert und zu einer Zeiteinsparung führt.

Ein wichtiges Werkzeug für die Diagnose von Krankheiten stellt die Analyse von Patientenproben wie beispielsweise Blut oder Urin dar [3]. Patientenproben werden meist dezentral in Arztpraxen entnommen und für die Analyse an Untersuchungseinrichtungen geschickt [4]. Typische Analysemethoden sind neben der Erstellung von Hämatogrammen auch der Nachweis von Pathogenen oder Antigenen, sowie das Screening nach sogenannten Biomarkern [5].

Den Analysemethoden vorangestellt ist dabei stets eine Probenaufbereitung. Diese macht im gesamten diagnostischen Prozess 25 % des Zeitaufwandes aus, die eigentliche Analysemethode hingegen 10 % [6]. Automatisiert wird daher neben der eigentlichen Analysemethode vermehrt auch die ihr vorangestellte Probenaufbereitung [2]. Vorteile dieser Automatisierung sind neben der höheren Produktivität der Labore, sowie der Steigerung der Qualität und Sicherheit, vor allem auch die reduzierte Zeit zwischen Probenabgabe bis zum Laborergebnis [5].

Der erste Schritt einer automatisierten Probenaufbereitung stellt meist die Eingabe der Patientenprobe aus dem Probengefäß in ein Zielgefäß im Gerät dar [1]. Im Folgenden wird dieser Prozess, d.h. die Eingabe einer Flüssigkeit aus einem Probengefäß in ein Zielgefäß, als Probeneingabe bezeichnet.

Die Anforderungen an die Probeneingabe sind aus Sicht der Prozessautomatisierung vielseitig: die Eingabe flexibel einstellbarer Probenvolumina sollte gewährleistet und Kontaminationen während der Eingabe ausgeschlossen sein, die Eingabedauer aller Proben sollte minimal und der Grad an Parallelisierung maximal sein. Auch der Bereich der Nachhaltigkeit, insbesondere die Vermeidung von Labormüll, stellt eine zunehmend relevante Anforderung dar [7]. Aktuelle Methoden für die Probeneingabe werden diesen Anforderungen nur in Teilen gerecht. Beispielsweise ist bei der Goldstandardmethode für den Transfer jeglicher Flüssigkeiten - dem Pipettieren - der Volumenbereich für die Probeneingabe durch das Fassungsvolumen der Pipettenspitzen limitiert. Deren Standardgrößen gehen nicht über 1 ml hinaus - Probenvolumina größer als 1 ml müssen demnach in mehreren Pipettierschritten transferiert werden, was sich nachteilig auf die Eingabedauer sowie das Kontaminationsrisiko auswirkt. Des Weiteren kann durch die Verwendung von Pipettenspitzen (single-use-Produkt/Einwegprodukt) eine Ansammlung von Labormüll nicht vermieden werden. Die vorliegende Erfindung bietet eine alternative Methode für die automatisierte Probeneingabe, die die oben genannten Anforderungen ausnahmslos erfüllt.

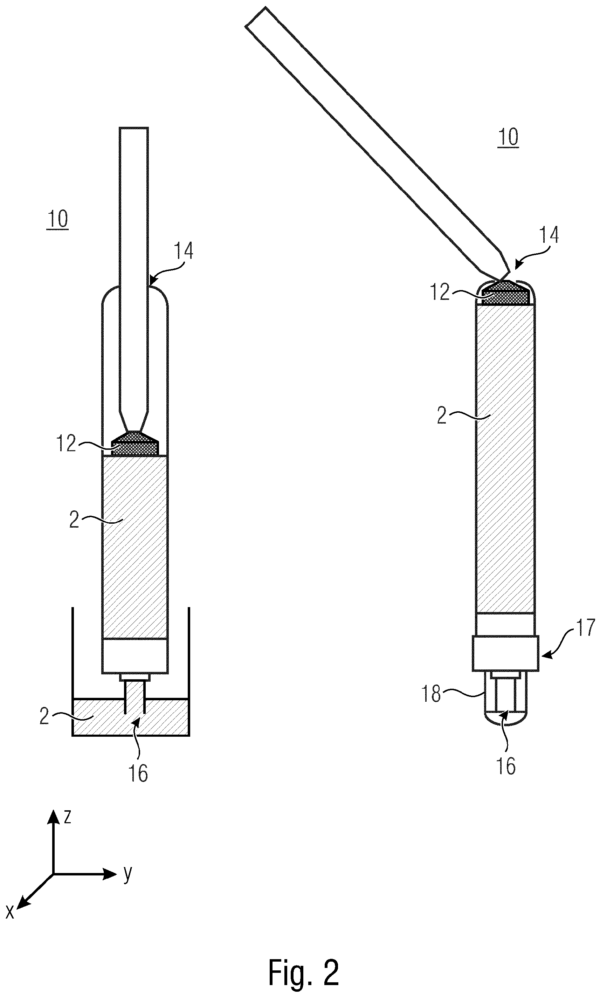

Die Patentschrift EP 1347282 B1 beschreibt eine Probeneingabevorrichtung für die Eingabe einzelner Proben (unter anderem aus einer Kolbenspritze) in einen Analysator. Im Falle der Kolbenspitze als Probenreservoir kann die Probe nach dem Einstecken der Spitze in die dafür vorgesehene Vorrichtung entweder über manuelle Betätigung in den Analysator eingespritzt werden, oder mit einer im Analysator integrierten Saugvorrichtung eingesogen werden (siehe Fig. 2 von [9]).

In Anbetracht der bereits bekannten Verfahren zum Transfer von Flüssigkeiten zwischen Probengefäßen, besteht ein Bedarf nach einem verbesserten Konzept für eine Ausgabe von Flüssigkeiten aus einem Probengefäß, z. B. in ein Zielgefäß, so dass den soeben beschriebenen Problemen und Anforderungen Rechnung getragen wird.

Dieses Ziel wird mit den Gegenständen der unabhängigen Ansprüche erreicht.

Weitere Ausführungsformen und vorteilhafte Aspekte sind in den jeweils abhängigen Patentansprüchen genannt.

### Zusammenfassung der Erfindung

Gemäß einem Aspekt der vorliegenden Erfindung haben die Erfinder der vorliegenden Anmeldung erkannt, dass ein Problem bei der Probeneingabe von Flüssigkeiten aus mehreren Probengefäßen, was z. B. für einen Transfer von Flüssigkeiten von dem jeweiligen Probengefäß in einen jeweiliges Zielgefäß benötigt wird, darin besteht, dass jedes Probengefäß nur einzeln verarbeitet werden kann und bei Probengefäßen mit großem Fassungsvermögen mehrere Pipettierschritte nötig sind. Gemäß einem Aspekt der vorliegenden Anmeldung werden diese Schwierigkeiten überwunden, indem eine Betätigungseinheit genutzt wird, die in mehreren Probengefäßen gleichzeitig den jeweiligen Kolben, der z. B. in dem jeweiligen Probengefäß angeordnet ist, betätigen kann, um aus den mehreren Probengefäßen jeweils eine Flüssigkeit auszugeben. Dies basiert auf der Erkenntnis, dass eine Mehrzahl von Probengefäße vorteilhaft relativ zueinander, z. B. an vorbestimmten Positionen, mittels einer Halterung positioniert werden können und dadurch ermöglicht wird, dass eine einzige Betätigungseinheit mit allen Kolben der Mehrzahl an Probengefäßen in Kontakt treten kann und diese parallel betätigen kann. Somit wird ein hoher Grad an Parallelisierung erzielt. Ferner ermöglicht die Betätigung eines Kolbens, dass der komplette Inhalt des jeweiligen Probengefäßes ausgegeben wird, d.h. das jeweilige Probengefäß kann entleert werden. Durch die Betätigung des jeweiligen Kolbens wird z. B. eine in dem jeweiligen Probengefäß angeordnete Flüssigkeit aus einer Ausgabeöffnung herausgedrückt, indem bei der Betätigung des jeweiligen Kolbens ein Probenvolumen in dem jeweiligen Probengefäß reduziert wird. Die erfindungsgemäße Vorrichtung ermöglicht, dass mit einer einzigen Betätigungseinheit und in einem einzigen Betätigungsschritt aus einer Mehrzahl an Probengefäßen jeweils ein flexibel einstellbares Probenvolumen ausgegeben werden kann. Dadurch kann aus jedem der Mehrzahl an Probengefäßen in kürzester Zeit eine vorbestimmte Menge, vorzugsweise die komplette Probenmenge, ausgegeben werden. Ferner wird dadurch, dass das in einem Schritt pro Probengefäß maximal ausgebbare Probenvolumen durch das Volumen der verwendeten Probengefäße bestimmt bzw. begrenzt wird, ermöglicht, dass auch große Probenvolumina, z. B. größer als 1 ml, effizient aus dem jeweiligen Gefäß ausgegeben werden können. Zudem wird durch die Ausgabe mittels eines Betätigungsschrittes eine Qualität und Sicherheit, z. B. in Bezug auf Kontaminationsrisiko, verbessert. Somit wird eine Vorrichtung zur Ausgabe von Flüssigkeiten aus einer Mehrzahl von Probengefäßen bereitgestellt, die sehr Effizient in Bezug auf eine Ausgabedauer und einen Grad an Parallelisierung ist und eine hohe Qualität erzielt.

Dementsprechend weist, gemäß einem Aspekt der vorliegenden Anmeldung, eine Vorrichtung zur parallelen Ausgabe von Flüssigkeit aus einer Mehrzahl von Probengefäßen eine Halterung und eine Fluidextraktionseinheit auf. Die Halterung ist ausgebildet, um die Mehrzahl von Probengefäßen aufzunehmen und zu positionieren und die Fluidextraktionseinheit ist ausgebildet, um parallel in jedem der Mehrzahl von Probengefäßen einen Kolben zu betätigen, um eine Flüssigkeit aus dem jeweiligen Probengefäß auszugeben.

Gemäß einem Ausführungsbeispiel weist die Fluidextraktionseinheit einen Aktuator und eine Stößelplatte mit einer Mehrzahl von Stößeln auf. Durch die Verwendung der Stößelplatte wird ein hoher Grad an Parallelisierung erzielt. Der Aktuator ist ausgebildet, um eine Relativbewegung zwischen der Stößelplatte und der Mehrzahl von Probengefäßen zu bewirken, um in jedem der Mehrzahl von Probengefäßen den jeweiligen Kolben mittels eines der Stößel der Stößelplatte zu betätigen. Jedem Kolben der Mehrzahl von Probengefäßen ist z. B. einer der Stößel der Stößelplatte zugeordnet, der auf den zugeordneten Kolben bei der durch den Aktuator bewirkten Relativbewegung der Stößelplatte drückt. Jedes der Mehrzahl von Probengefäßen weist z. B. eine Kolbenbetätigungsöffnung auf und der Aktuator ist z. B. ausgebildet, um bei jedem der Mehrzahl von Probengefäßen den jeweiligen Kolben zu betätigen, indem der zugeordnete Stößel durch die jeweilige Kolbenbetätigungsöffnung geführt wird. Der jeweilige Kolben wird mittels des zugeordneten Stößels von der Kolbenbetätigungsöffnung weg, z. B. in Richtung einer Ausgabeöffnung bzw. Austrittsöffnung des jeweiligen Probengefäßes, bewegt, z. B. um die Flüssigkeit aus dem jeweiligen Probengefäß durch die Ausgabeöffnung bzw. Austrittsöffnung des jeweiligen Probengefäßes auszugeben, z. B. an einer der Kolbenbetätigungsöffnung gegenüberliegenden Seite des Probengefäßes. Bei diesem Ausführungsbeispiel wird eine hohe Probenausgabeeffizienz erzielt, da mit einer Betätigungseinheit aus mehreren Probengefäßen gleichzeitig Flüssigkeit ausgegeben werden kann und die Probenausgabe mittels des Aktuators automatisiert erfolgt. Ferner ist die Probenausgabe mittels der Stößelplatte ressourcenschonend bzw. nachhaltig, da diese mehrfach wiederverwendet werden kann, da diese nicht in Kontakt mit der Flüssigkeit kommt.

Gemäß einem Ausführungsbeispiel entspricht eine relative Anordnung der Mehrzahl von Stößeln zueinander einer durch die Halterung vorgegebenen relativen Anordnung der Mehrzahl von Probengefäßen zueinander. Dies erleichtert die Bedienung der Vorrichtung und erhöht die Effizienz, da somit eine eindimensionale Relativbewegung zwischen der Mehrzahl von Stößeln und der Mehrzahl von Probengefäßen mittels des Aktuators für eine Probenausgabe bereits ausreichend ist. Sind z. B. Halterung und Stößelplatte aufeinander ausgerichtet, kann die Stößelplatte mittels des Aktuators in Richtung der Mehrzahl von Probengefäßen bewegt werden, um die Kolben der Mehrzahl von Probengefäßen zu betätigen.

Gemäß einem alternativen Ausführungsbeispiel weist die Fluidextraktionseinheit eine Drucklufteinheit auf, die ausgebildet ist, um Druckluft gleichzeitig an Betätigungsfenstern der Mehrzahl von Probengefäßen anzulegen, um die Kolben mittels der Druckluft zu betätigen. Die Betätigungsfenster können hierin auch als Kolbenbetätigungsöffnungen; bzw. Probengefäßöffnungen zu dem jeweiligen Kolben bezeichnet werden. Die an die Betätigungsfenster angelegte Druckluft bewegt die Kolben der Mehrzahl von Probengefäßen von den Betätigungsfenstern weg, z. B. in Richtung einer Ausgabeöffnung bzw. Austrittsöffnung des jeweiligen Probengefäßes, z. B. um die Flüssigkeit aus dem jeweiligen Probengefäß durch die Ausgabeöffnung bzw. Austrittsöffnung des jeweiligen Probengefäßes auszugeben, z. B. an einer dem Betätigungsfenster gegenüberliegenden Seite des Probengefäßes. Bei diesem Ausführungsbeispiel wird eine hohe Probenausgabeeffizienz erzielt, da mit einer Betätigungseinheit aus mehreren Probengefäßen gleichzeitig Flüssigkeit ausgegeben werden kann und die Probenausgabe mittels der Druckluft automatisiert erfolgt. Ferner ist die Probenausgabe mittels der Drucklufteinheit ressourcenschonend bzw. nachhaltig, da diese mehrfach wiederverwendet werden kann.

Gemäß einem Ausführungsbeispiel weist die Drucklufteinheit einen Hohlkörper mit einem Druckluftanschluss und einer Mehrzahl von Druckluftauslassöffnungen auf. Der Druckluftanschluss und die Druckluftauslassöffnungen bilden z. B. Öffnungen zu einem Hohlraum des Hohlkörpers. Der Druckluftanschluss ist z. B. an einer der Mehrzahl an Druckluftauslassöffnungen gegenüberliegenden Seite des Hohlkörpers angeordnet, wobei eine der anderen Seiten des Hohlkörpers alternativ denkbar wäre. Eine relative Anordnung der Mehrzahl von Druckluftauslassöffnungen zueinander entspricht einer durch die Halterung vorgegebenen relativen Anordnung der Mehrzahl von Probengefäßen zueinander. Sind z. B. Halterung und Drucklufteinheit aufeinander ausgerichtet, kann die Druckluft gezielt durch die Mehrzahl von Druckluftauslassöffnungen zu den Kolben der Mehrzahl von Probengefäßen geführt werden, was die Effizienz bei der Ausgabe von Flüssigkeit aus den Probengefäßen steigert. Ferner wird beispielsweise dadurch, dass die Anordnung von Druckluftauslassöffnungen auf die von der Halterung vorbestimmte Anordnung der Mehrzahl von Probengefäßen abgestimmt ist, eine Abdichtung zwischen der Drucklufteinheit und der Mehrzahl von Probengefäßen erleichtert. Dies reduziert bzw. vermeidet ein Verlust von Druckluft, wodurch die Kolben effizient betätigt werden können. Jedem Kolben der Mehrzahl von Probengefäßen ist z. B. eine der Druckluftauslassöffnungen der Drucklufteinheit zugeordnet, durch die Druckluft auf den zugeordneten Kolben drückt. Jedes der Mehrzahl von Probengefäßen weist z. B. ein Betätigungsfenster auf und die Drucklufteinheit ist z. B. ausgebildet, um bei jedem der Mehrzahl von Probengefäßen den jeweiligen Kolben zu betätigen, indem Druckluft über die zugeordnete Druckluftdurchlassöffnung und die jeweilige Kolbenbetätigungsöffnung zu dem jeweiligen Kolben geführt wird. Mögliche Spalten bzw. Zwischenräume zwischen einer Druckluftdurchlassöffnung und einer zugeordneten Kolbenbetätigungsöffnung können abgedichtet sein, um einen Druckluftverlust zu minimieren.

Gemäß einem Ausführungsbeispiel weist die Drucklufteinheit auf einer Seite mit der Mehrzahl von Druckluftauslassöffnungen eine Dichtungseinheit auf, um Kontaktflächen zwischen der Drucklufteinheit und den Probengefäßen der Mehrzahl von Probengefäßen abzudichten. Die Dichtungseinheit weist beispielsweise ein Dichtungsmaterial, wie z. B. Schaumstoffmaterial, Korkmaterial oder Polymermaterial, wie z. B. Kautschukmaterial oder Silikonmaterial, auf. Die Dichtungseinheit ist z. B. ausgebildet, um Zwischenräume bzw. Spalten zwischen den Druckluftauslassöffnungen der Dichtungseinheit und den Betätigungsfenstern der Mehrzahl von Probengefäßen abzudichten. Hierdurch wird ein Druckluftverlust reduziert bzw. vermieden und somit eine hohe Effizienz bei der Probenausgabe erzielt, da eine hohe Kraft mittels der Druckluft auf die Kolben der Mehrzahl von Probengefäßen wirkt.

Gemäß einem Ausführungsbeispiel weist die Drucklufteinheit einen Basiskörper mit einer Ausnehmung und mit einem zu der Ausnehmung führenden Druckluftanschluss auf. Die Ausnehmung ist ausgebildet, um alle in der Halterung aufnehmbaren Probengefäße zu überspannen, d.h. die Ausnehmung ist über die in der Halterung aufnehmbaren Probengefäße stülpbar. In anderen Worten weist die Drucklufteinheit eine einzige Druckluftauslassöffnung auf, die alle in der Halterung aufnehmbaren Probengefäße überspannt. Die Halterung der Vorrichtung definiert z. B. einen Bereich zur Positionierung der Mehrzahl von Probengefäßen und z. B. eine relative Anordnung der Mehrzahl von Probengefäßen zueinander innerhalb des Bereichs. Abmessungen der Druckluftauslassöffnung der Ausnehmung entsprechen mindestens den Abmessungen dieses Bereichs. Falls die Halterung ausgebildet ist, um die Probengefäße so aufzunehmen, dass Enden mit den Betätigungsfenstern der Probengefäße aus der Halterung hervorragen, entspricht eine Tiefe der Ausnehmung z. B. mindestens einer Höhe der aus der Halterung ragenden Enden.

Gemäß einem Ausführungsbeispiel weist die Vorrichtung eine Handhabungsvorrichtung, auf, die ausgebildet ist, um die Halterung und die Fluidextraktionseinheit miteinander auszurichten. Die Handhabungsvorrichtung ist z. B. ausgebildet, um die Fluidextraktionseinheit auf die Halterung auszurichten. Die Handhabungsvorrichtung ist beispielsweise ausgebildet, um zumindest eines der beiden Elemente, d.h. die Fluidextraktionseinheit und/oder die Halterung, zu bewegen, so dass für jedes der Mehrzahl an Probengefäßen eines der Betätigungsmittel der Fluidextraktionseinheit auf ein jeweiliges Betätigungsfenster, z. B. eine Kolbenbetätigungsöffnung bzw. eine Probengefäßöffnung zu dem jeweiligen Kolben, ausgerichtet ist. Die Fluidextraktionseinheit weist als Betätigungsmittel z. B. Stößel oder Druckluftauslassöffnung auf. Die Handhabungsvorrichtung erleichtert eine Handhabung der Vorrichtung und damit eine Effizienz bei der Ausgabe von Flüssigkeiten mittels der Vorrichtung, da die Handhabungsvorrichtung ermöglicht, dass die Halterung und die Fluidextraktionseinheit zunächst getrennt voneinander angeordnet sind und z. B. erst für die Ausgabe von Flüssigkeiten aus der Mehrzahl von Probengefäßen miteinander ausgerichtet werden. Dadurch wird unteranderem ein Einfügen der Mehrzahl von Probengefäßen in die Halterung erleichtert.

Bei der Ausrichtung von Halterung und Fluidextraktionseinheit ist die Handhabungsvorrichtung beispielsweise ausgebildet, um jeden der Mehrzahl von Stößeln der Stößelplatte der Fluidextraktionseinheit mit einem entsprechenden Betätigungsfenster eines Probengefäßes der Mehrzahl von Probengefäßen auszurichten bzw. um für jedes der Mehrzahl von Probengefäßen einen der Mehrzahl von Stößeln der Stößelplatte der Fluidextraktionseinheit mit einem entsprechenden Betätigungsfenster eines Probengefäßes der Mehrzahl von Probengefäßen auszurichten.

Bei der Ausrichtung von Halterung und Fluidextraktionseinheit ist die Handhabungsvorrichtung alternativ beispielsweise ausgebildet, um jede der Mehrzahl von Druckluftauslassöffnungen der Drucklufteinheit der Fluidextraktionseinheit mit einem entsprechenden Betätigungsfenster eines Probengefäßes der Mehrzahl von Probengefäßen auszurichten bzw. um für jedes der Mehrzahl von Probengefäßen eine der Druckluftauslassöffnungen der Drucklufteinheit der Fluidextraktionseinheit mit einem entsprechenden Betätigungsfenster eines Probengefäßes der Mehrzahl von Probengefäßen auszurichten.

Bei der Ausrichtung von Halterung und Fluidextraktionseinheit ist die Handhabungsvorrichtung alternativ beispielsweise ausgebildet, um die Ausnehmung in dem Basiskörper der Drucklufteinheit über in der Halterung aufgenommene und positionierte Probengefäße zu stülpen.

Gemäß einem Ausführungsbeispiel ist die Handhabungsvorrichtung ferner ausgebildet, um die Halterung und ein Zielgefäß miteinander auszurichten. Bei dem Zielgefäß handelt es sich z. B. um ein Gefäß bzw. einen Behälter in das bzw. in den von der Vorrichtung ausgegebene Flüssigkeit eingegeben wird. Das Zielgefäß weist beispielsweise für jedes der Mehrzahl von Probengefäßen eine entsprechende Gefäßeinheit auf. Die Gefäßeinheiten des Zielgefäßes sind z. B. fluidisch voneinander getrennt. Die Handhabungsvorrichtung ist z. B. ausgebildet, um für jedes der Mehrzahl von Probengefäßen die entsprechende Austrittsöffnung bzw. Ausgabeöffnung mit einer entsprechende Gefäßeinheit des Zielgefäßes auszurichten. Alternativ kann die Handhabungsvorrichtung ausgebildet sein, um die Halterung mit einer Mehrzahl von Zielgefäßen auszurichten, wobei z. B. für jedes der Mehrzahl von Probengefäßen ein entsprechendes Zielgefäß vorliegt. Die Handhabungsvorrichtung ist z. B. ausgebildet, um für jedes der Mehrzahl von Probengefäßen die entsprechende Austrittsöffnung bzw. Ausgabeöffnung mit einem der Mehrzahl von Zielgefäßen auszurichten. Die Handhabungsvorrichtung ist beispielsweise ausgebildet, um die Fluidextraktionseinheit, die Halterung und das Zielgefäß bzw. die Mehrzahl von Zielgefäßen miteinander auszurichten, z. B. so, dass das Zielgefäß bzw. die Mehrzahl von Zielgefäßen, die Halterung und die Fluidextraktionseinheit in dieser Reihenfolge übereinander angeordnet sind.

Gemäß einem Ausführungsbeispiel ist die Halterung ausgebildet, um die Mehrzahl von Probengefäßen in einer zweidimensionalen Anordnung anzuordnen. Die Halterung definiert beispielsweise Positionen für die Mehrzahl von Probengefäßen. Bei der zweidimensionalen Anordnung kann es sich z. B. um eine Raster-Anordnung bzw. ein Array mit Probengefäßpositionen, die in Zeilen und Spalten angeordnet sind, handeln. Alternativ handelt es sich bei der zweidimensionalen Anordnung beispielsweise um ein Muster gemäß dem die Probengefäßpositionen angeordnet sind. Die Mehrzahl von Probengefäßen sind in der zweidimensionalen Anordnung z. B. so angeordnet, dass Betätigungsfenster der Probengefäße zueinander ausgerichtet sind. Vorzugsweise liegend die Betätigungsfenster der Mehrzahl von Probengefäßen in einer Ebene. Die von der Halterung vorbestimmte Anordnung der Mehrzahl von Probengefäßen ist beispielsweise mit einer Anordnung von Betätigungsmittel, wie Stößel oder Druckluftauslassöffnungen, der Fluidextraktionseinheit abgestimmt.

Ein Ausführungsbeispiel, gemäß einem Aspekt der vorliegenden Anmeldung, schafft ein Verfahren zur parallelen Ausgabe von Flüssigkeiten aus einer Mehrzahl von Probengefäßen. Das Verfahren umfasst ein Einfügen der Mehrzahl von Probengefäßen in eine Halterung und ein Betätigen einer Betätigungseinheit, durch das gleichzeitig und parallel in jedem der Mehrzahl von Probengefäßen ein jeweiliger Kolben betätigt wird, um eine Flüssigkeit aus jedem der Probengefäße auszugeben.

Das Verfahren basiert auf den gleichen Überlegungen wie die oben beschriebene Vorrichtung. Das Verfahren kann mit allen Merkmalen und Funktionalitäten ergänzt werden, die auch im Hinblick auf die Vorrichtung beschrieben werden.

Gemäß einem Ausführungsbeispiel des Verfahrens wird bei dem Betätigen der Betätigungseinheit eine Stößelplatte mit einer Mehrzahl von Stößeln vertikal in Richtung der Mehrzahl von Probengefäßen bewegt. Vertikal bedeutet z. B. senkrecht zu einer Ebene, in der Betätigungsfenster der Mehrzahl von Probengefäßen liegen. Durch diese vertikale Bewegung wird jeder Kolben der Mehrzahl von Probengefäßen durch einen dem jeweiligen Kolben zugeordneten Stößel der Stößelplatte betätigt, d.h. von dem jeweiligen Betätigungsfenster wegbewegt bzw. weggedrückt.

Gemäß einem alternativen Ausführungsbeispiel werden bei dem Betätigen der Betätigungseinheit die Kolben der Mehrzahl von Probengefäßen mittels Druckluft betätigt.

Gemäß einem Ausführungsbeispiel umfasst das Verfahren ein Ausrichten von Betätigungsmitteln, wie z. B. Stößel oder Druckluftöffnungen, der Betätigungseinheit mit Betätigungsfenstern der Mehrzahl von Probengefäßen.

### Figurenkurzbeschreibung

Ausführungsbeispiele gemäß der vorliegenden Erfindung werden nachfolgend Bezug nehmend auf die beiliegenden Figuren näher erläutert. Hinsichtlich der dargestellten schematischen Figuren wird darauf hingewiesen, dass die dargestellten Funktionsblöcke sowohl als Elemente oder Merkmale der erfindungsgemäßen Vorrichtung als auch als entsprechende Verfahrensschritte des erfindungsgemäßen Verfahrens zu verstehen sind, und auch entsprechende Verfahrensschritte des erfindungsgemäßen Verfahrens davon abgeleitet werden können. Es zeigen:
- Fig. 1: eine schematische Darstellung eines erfindungsgemäßen Ausführungsbeispiels einer Vorrichtung zur parallelen Ausgabe von Flüssigkeiten aus einer Mehrzahl von Probengefäßen;
- Fig. 2: ein Beispiel eines für die erfindungsgemäße Vorrichtung und das erfindungsgemäße Verfahren geeigneten Probengefäßes;
- Fig. 3: eine schematische Darstellung eines erfindungsgemäßen Ausführungsbeispiels einer Vorrichtung mit Stößelplatte;
- Fig. 4: eine schematische Darstellung eines erfindungsgemäßen Ausführungsbeispiels einer Vorrichtung mit Drucklufteinheit;
- Fig. 5a: ein schematischer Querschnitt durch eine erfindungsgemäße Drucklufteinheit mit einer Mehrzahl von Druckluftauslassöffnungen;
- Fig. 5b: ein schematischer Querschnitt durch eine erfindungsgemäße Drucklufteinheit mit einer Druckluftauslassöffnung;
- Fig. 6: eine schematische Darstellung eines erfindungsgemäßen Ausführungsbeispiels einer Vorrichtung mit einer Drucklufteinheit, deren Auslassöffnung Betätigungsöffnungen einer Mehrzahl von Probengefäßen überspannt; und
- Fig. 7: ein Blockdiagramm eines erfindungsgemäßen Ausführungsbeispiels eines Verfahrens zur parallelen Ausgabe von Flüssigkeiten aus einer Mehrzahl von Probengefäßen.

### Detaillierte Beschreibung der Ausführungsbeispiele gemäß den Figuren

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen oder ähnlichen Bezugszeichen versehen sind, so dass die in unterschiedlichen Ausführungsbeispielen dargestellte Beschreibung dieser Elemente untereinander austauschbar ist bzw. aufeinander angewendet werden kann.

Zur Erleichterung der Beschreibung der verschiedenen Ausführungsformen weisen einige der Figuren ein kartesisches Koordinatensystem x, y, z auf, wobei die x-y-Ebene z. B. eine Bezugsebene darstellt. Die x-y-Ebene entspricht z. B. einer Ebene bzw. liegt z. B. parallel zu der Ebene, in der Betätigungsfenster von Probengefäßen angeordnet sind, oder die x-y-Ebene entspricht z. B. einem ersten Hauptoberflächenbereich bzw. liegt z. B. parallel zu dem ersten Hauptoberflächenbereich einer Halterung einer hierin beschriebenen Vorrichtung. Eine Richtung senkrecht nach oben in Bezug auf die Bezugsebene (x-y-Ebene) entspricht der "+z"-Richtung und eine Richtung senkrecht nach unten in Bezug auf die Bezugsebene (x-y-Ebene) der "-z"-Richtung. In der folgenden Beschreibung bedeutet der Begriff "lateral" eine Richtung parallel zur x- und/oder y-Richtung, d.h. parallel zur x-y-Ebene, wobei der Begriff "vertikal" eine Richtung parallel zur z-Richtung bedeutet.

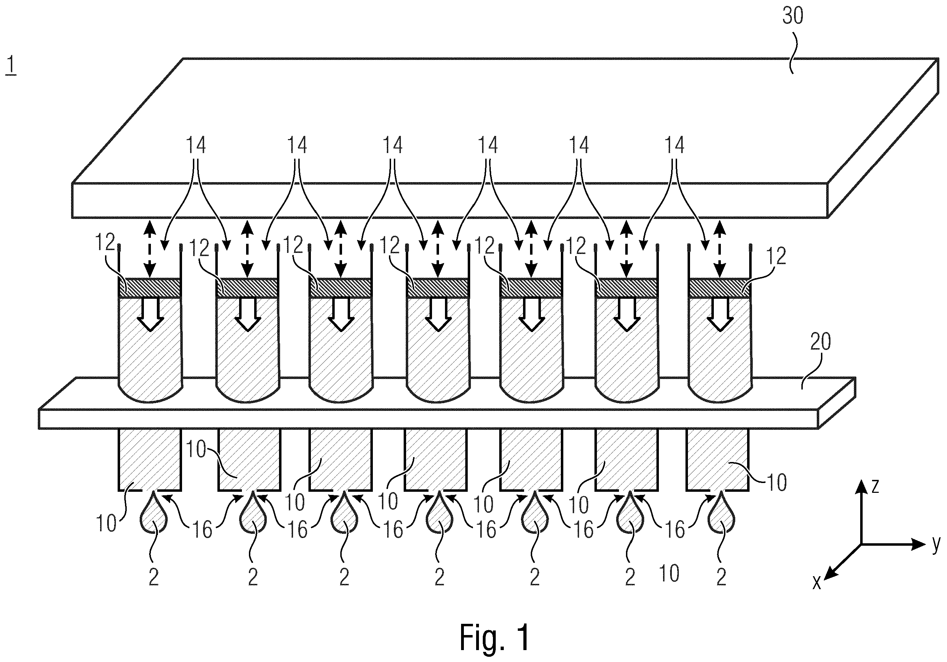

Fig. 1 zeigt eine Vorrichtung 1 zur parallelen Ausgabe von Flüssigkeiten 2 aus einer Mehrzahl von Probengefäßen 10. Die Vorrichtung 1 ist insbesondere für Probengefäße 10 mit Kolben 12 geeignet.

Die Vorrichtung 1 weist eine Halterung 20 zur Aufnahme und Positionierung der Mehrzahl von Probengefäßen 10 auf. Die Halterung 20 ist z. B. ausgebildet, um die Probengefäße 10 an vorbestimmten Positionen zu fixieren.

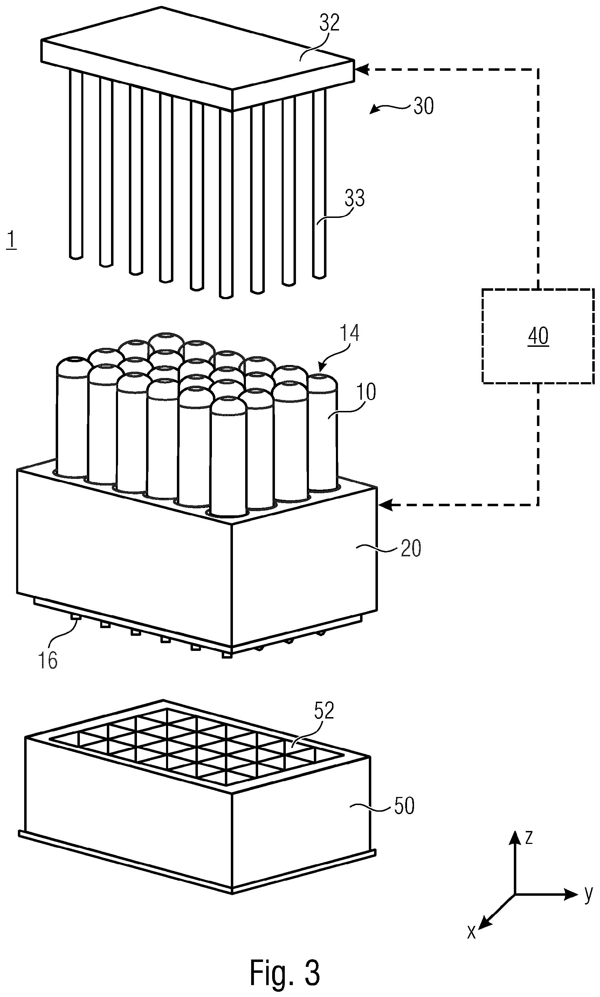

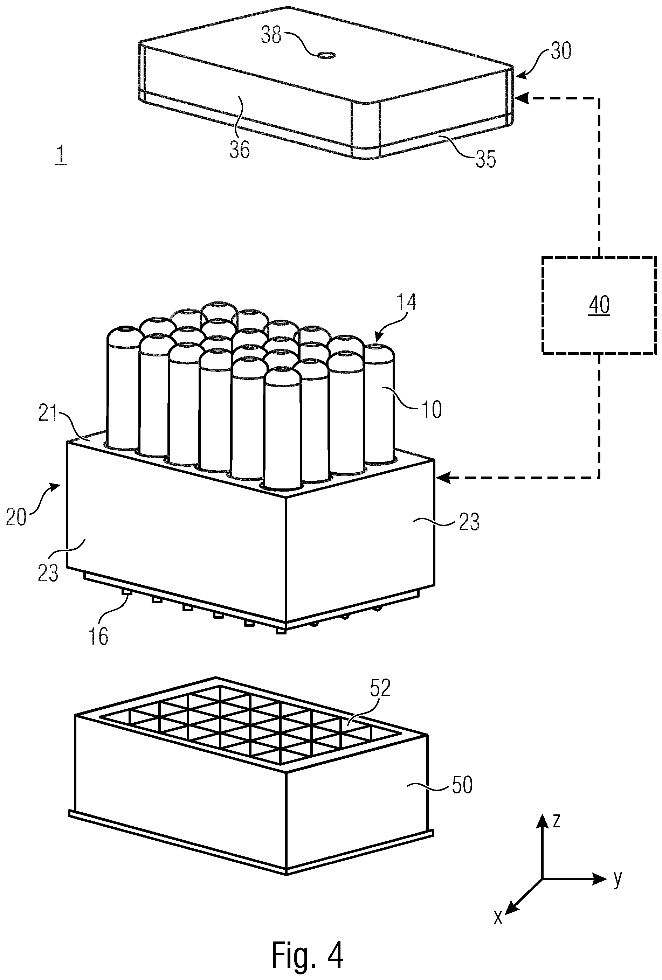

Ferner weist die Vorrichtung 1 eine Fluidextraktionseinheit 30 auf, die hierin auch als Betätigungseinheit bezeichnet wird. Die Fluidextraktionseinheit 30 ist ausgebildet, um parallel in jedem der Mehrzahl von Probengefäßen 10 einen Kolben 12 zu betätigen, um die Flüssigkeit 2 aus dem jeweiligen Probengefäß 10 auszugeben. Hierfür tritt die Fluidextraktionseinheit z. B. in Kontakt mit den Kolben 12 der Mehrzahl von Probengefäßen 10, z. B. mittels Stößel (siehe Fig. 3) oder mittels Druckluft (siehe Fig. 4-6). Vorzugsweise ist kein Mittel bzw. Element der Fluidextraktionseinheit 30 an den Kolben 12 der Probengefäße 10 fixiert bzw. befestigt. Die Fluidextraktionseinheit 30 ist von den in der Mehrzahl von Probengefäßen 10 angeordneten Flüssigkeiten 2 durch den jeweiligen Kolben 12 getrennt.

Für die Vorrichtung 1 geeignete Probengefäße 10 weisen beispielsweise jeweils ein Betätigungsfenster 14 auf, durch das die Fluidextraktionseinheit 30 den jeweiligen Kolben 12 betätigen kann. In anderen Worten ist die Fluidextraktionseinheit 30 z. B. ausgebildet, um über ein Betätigungsfenster 14 des jeweiligen Probengefäßes 10 mit dem jeweiligen Kolben 12 in Kontakt zu treten und diesen zu betätigen. Die Fluidextraktionseinheit 30 ist beispielsweise ausgebildet, um die Kolben 12 der Mehrzahl von Probengefäßen 10 von dem jeweiligen Betätigungsfenster 14 wegzubewegen.

Bei dem Betätigungsfenster 14 handelt es sich vorzugsweise um eine Öffnung in dem jeweiligen Probengefäß 10 zu einem Probengefäßinnenvolumen, in dem der jeweilige Kolben 12 angeordnet ist. Alternativ könnte das Betätigungsfenster 14 ein Material aufweisen das flexible, z. B. elastisch oder reversibel deformierbar, ist und die Fluidextraktionseinheit 30 könnte ausgebildet sein, um das jeweilige Betätigungsfenster 14 zu deformieren, um den jeweiligen Kolben 12 zu betätigen.

Die Fluidextraktionseinheit 30 ist ausgebildet, um durch das Betätigen der Kolben 12 der Mehrzahl von Probengefäßen 10 die jeweilige Flüssigkeit 2 über eine Ausgabeöffnung 16 des jeweiligen Probengefäßes 10 auszugeben. Die Fluidextraktionseinheit 30 ist beispielsweise ausgebildet, um die Kolben 12 der Mehrzahl von Probengefäßen 10 in Richtung der Ausgabeöffnungen 16 zu bewegen. Dadurch wird die jeweilige Flüssigkeit 2 aus dem jeweiligen Probengefäß 10 gedrückt.

Fig. 2 zeigt exemplarisch ein für eine hierin beschriebe Vorrichtung 1 oder ein hierin beschriebenes Verfahren 100 geeignetes Probengefäß 10. Die Halterung 20 der Vorrichtung 1 kann ausgebildet sein, um eine Mehrzahl von in Zusammenhang mit Fig. 2 beschriebenen Probengefäßen 10 aufzunehmen. Ein für die Vorrichtung 1 und das Verfahren 100 geeignetes Probengefäß 10 weist zumindest einen Kolben 12, ein Betätigungsfenster 14 und eine Ausgabeöffnung 16 auf.

Der Kolben 12 des Probengefäßes 10 teilt ein Probengefäßinnenvolumen des Probengefäßes 10 in einen ersten Volumenabschnitt und einen zweiten Volumenabschnitt auf. Das Betätigungsfenster 14 stellt einen Zugang zu dem ersten Volumenabschnitt dar und die Ausgabeöffnung 16 stellt eine Öffnung zu dem zweiten Volumenabschnitt dar. Der erste Volumenabschnitt und der zweite Volumenabschnitt sind voneinander durch den Kolben 12 fluidisch getrennt.

Vorzugsweise ist das Betätigungsfenster 14 des Probengefäßes 10 in eine erste Richtung ausgerichtet und die Ausgabeöffnung 16 des Probengefäßes 10 in eine zweite, der ersten Richtung entgegengesetzten, Richtung ausgerichtet. Der Kolben 12 ist in dem Probengefäß 10 zwischen dem Betätigungsfenster 14 und der Ausgabeöffnung 16 angeordnet. Die Ausgabeöffnung 16, der Kolben 12 und das Betätigungsfenster 14 sind, z. B. in dieser Reihenfolge, auf einer Achse, z. B. einer Achse entlang einer longitudinalen Richtung des Probengefäßes 10, angeordnet bzw. miteinander ausgerichtet. Das heißt die Ausgabeöffnung 16, der Kolben 12 und das Betätigungsfenster 14 sind z. B. vertikal übereinander angeordnet.

Das Betätigungsfenster 14 ist z. B. als Öffnung des Probengefäßes 10 realisiert. Das Betätigungsfenster 14 repräsentiert einen Zugang zu dem Kolben 12 des Probengefäßes 10. Die Fluidextraktionseinheit 30 einer hierin beschriebenen Vorrichtung 1 kann ausgebildet sein, um über das Betätigungsfenster 14 den Kolben 12 des Probengefäßes 10 zu betätigen. Die Halterung 20 einer hierin beschriebenen Vorrichtung 1 kann ausgebildet sein, um das Probengefäß 10 so aufzunehmen, dass das Betätigungsfenster 14 der Fluidextraktionseinheit 30 zugewandt angeordnet ist.

Durch die Ausgabeöffnung 16 kann, wie links in Fig. 2 dargestellt, eine Flüssigkeit 2 in das Probengefäß 10 eingebracht werden. Hierfür weist das Probengefäß 10 beispielsweise einen an dem Kolben 12 befestigten Stößel 12 auf, der von der Ausgabeöffnung 16 weg in Richtung des Betätigungsfensters 14 bewegt wird. Der an dem Kolben 12 befestigte Stößel ist durch das Betätigungsfenster 14 geführt. Durch eine Bewegung des Kolbens 12 in Richtung des Betätigungsfensters 14 wird die Flüssigkeit 2 in das Probengefäß 10 gesaugt. Ist das Probengefäß 10 befüllt bzw. ist eine vorbestimmte Menge an Flüssigkeit 2 in das Probengefäß 10 eingebracht worden, kann der an dem Kolben 12 befestigte Stößel abgebrochen werden, siehe rechts in Fig. 2. Für einen Transport des Probengefäßes 10 kann dieses einen Deckel 18 aufweisen, der die Ausgabeöffnung 16 verschließt bzw. abdeckt.

Die hierin beschriebene Vorrichtung 1 ist ausgebildet, um die Flüssigkeit 2 aus dem Probengefäß 10, das keinen an dessen Kolben 12 befestigten Stößel aufweist, auszugeben, d.h., Probengefäße 10 mit abgebrochenem Stößel können von der Halterung 20 der Vorrichtung 1 aufgenommen werden. Ein für die Vorrichtung 1 geeignetes Probengefäß 10 weist kein Kolbenbetätigungsmittel auf, das an dem Kolben 12 befestigt ist.

Falls das Probengefäß 10 für einen Transport den Deckel 18 aufweist, wird dieser abgenommen, bevor das Probengefäß 10 in die Halterung 20 der Vorrichtung 1 eingefügt wird. Die Halterung 20 ist ausgebildet, um Probengefäße 10 ohne Deckel 18 aufzunehmen.

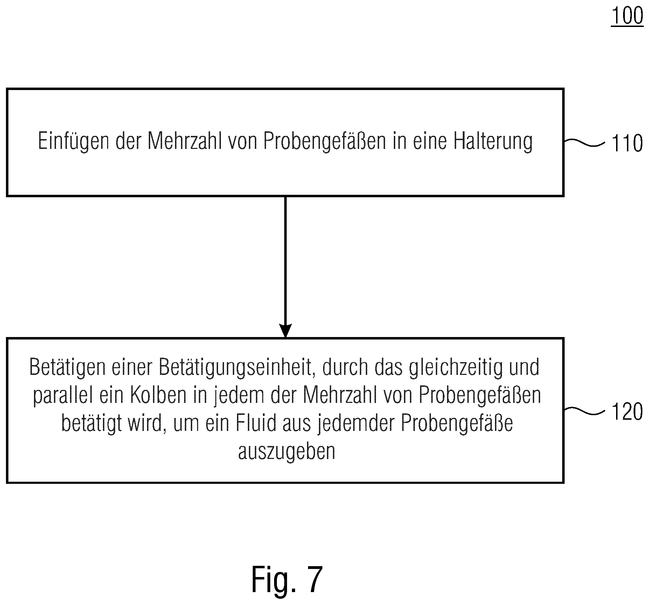

Wie in Fig. 2 dargestellt, ist die Ausgabeöffnung 16 beispielsweise mittels einer Schraubverbindung 17 an dem Probengefäß 10 angebracht. Bisher wurde die Flüssigkeit 2 aus dem Probengefäß 10 ausgegeben, indem die Ausgabeöffnung 16 von dem Probengefäß 10 mittels aufdrehen der Schraubverbindung gelöst wird, eine Pipette in das geöffnete Probengefäß 10 eingeführt wird und die Flüssigkeit 2 von der Pipette aufgenommen bzw. eingesaugt wird. Dies hat allerdings den Nachteil, dass jedes Probengefäß 10 einzeln entleert werden muss und bei großen Probenvolumina, d.h. bei großem Volumen der in dem Probengefäß 10 aufgenommenen Flüssigkeit 2, viele Pipettierschritte nötig sind, bis das komplette Probengefäß 10 entleert ist. Dieses Problem wird durch eine hierin beschriebene Vorrichtung 1, siehe Fig. 1, Fig. 3, Fig. 4 und Fig. 6, bzw. durch ein hierin beschriebenes Verfahren 100, siehe Fig. 7, gelöst.

Fig. 3 zeigt ein erstes Ausführungsbeispiel der vorliegenden Erfindung, bei dem die Fluidextraktionseinheit 30 der Vorrichtung 1 eine Stößelplatte 32 aufweist. Die Vorrichtung 1 gemäß Fig. 1 kann Merkmale und/oder Funktionalitäten, wie sie in Zusammenhang mit Fig. 3 beschrieben sind aufweisen.

Die Stößelplatte 32 weist eine Mehrzahl von Stößeln 33 auf. Die Stößel 33 der Mehrzahl von Stößeln 33 weisen beispielsweise alle die gleiche longitudinale Ausdehnung, d.h. eine Länge senkrecht zu einer Grundplatte der Stößelplatte 32, auf. Die Mehrzahl von Stößeln 33 sind über die Grundplatte miteinander verbunden und können gemeinsam bewegt werden. Die Stößel 33 der Mehrzahl von Stößeln 33 können nicht unabhängig voneinander bewegt werden bzw. die Fluidextraktionseinheit 30 ist ausgebildet, um die Mehrzahl von Stößeln 33 gleichzeitig miteinander zu bewegen.

Eine relative Anordnung der Mehrzahl von Stößeln 33 zueinander entspricht einer durch die Halterung 20 vorgegebenen relativen Anordnung der Mehrzahl von Probengefäßen 10 zueinander. Fig. 3 zeigt beispielhaft eine Array-Anordnung, bei der die Mehrzahl von Stößeln 33 und die Mehrzahl von Probengefäßen 10 in Reihen und Spalten angeordnet sind. Zueinander benachbarte Stößel 33 innerhalb einer Reihe und/oder innerhalb einer Spalte weisen z. B. den gleichen Abstand zueinander auf. Zum Beispiel ein Abstand, d.h. ein Mittenabstand, zwischen zwei benachbarten Stößeln 33 der Stößelplatte 32 entspricht einem Abstand, d.h. einem Mittenabstand, zwischen zwei korrespondierenden von der Halterung 20 vorgegebenen Positionen benachbarter Probengefäße 10. Eine Anzahl der Mehrzahl von Stößeln 33 entspricht beispielsweise einer durch die Halterung 20 der Vorrichtung 1 vorgegebenen Anzahl an aufnehmbaren Probengefäßen 10.

Die Stößel 33 der Stößelplatte 32 sind beispielsweise mit den Betätigungsfenstern 14 der Mehrzahl von Probengefäßen 10 ausrichtbar. Die Vorrichtung 1 weist beispielsweise eine Handhabungsvorrichtung 40 auf, die ausgebildet ist, um die Stößelplatte 32 mit der Halterung 20 auszurichten, z. B. so, dass jeder der Mehrzahl von Stößeln 33 mit einem zugehörigen Betätigungsfenster 14 eines Probengefäßes 10 der Mehrzahl von Probengefäßen 10 ausgerichtet ist. Ein Stößel 33 und ein zugehöriges Betätigungsfenster 14 sind beispielsweise auf einer gemeinsamen Achse, z. B. einer Achse entlang einer longitudinalen Richtung des Stößels 33, angeordnet bzw. miteinander ausgerichtet. Für die Ausrichtung der Stößelplatte 32 mit der Halterung 20 kann beispielsweise die Stößelplatte 32 und/oder die Halterung 20 bewegt werden.

Ist die Stößelplatte 32 mit der Halterung 20 ausgerichtet, kann beispielsweise ein Aktuator der Fluidextraktionseinheit 30 eine Relativbewegung zwischen der Stößelplatte 32 und den Probengefäßen 10 bewirken, um in jedem der Mehrzahl von Probengefäßen 10 den jeweiligen Kolben 12 mittels eines der Stößel 33 der Stößelplatte 32 zu betätigen. Bei der Relativbewegung handelt es sich beispielsweise um eine Bewegung in vertikaler Richtung, d.h., senkrecht zu der Grundplatte der Stößelplatte 32 bzw. parallel zu einer longitudinalen Richtung der Stößel 33. Mittels der Relativbewegung wird jeder der Stößel 33 durch ein zugehöriges Betätigungsfenster 14 eines zugehörigen Probengefäßes 10 geführt, mit dem zugehörigen Kolben 12 in Kontakt gebracht und der zugehörige Kolben 12 von dem zugehörigen Betätigungsfenster 14 weg bewegt. Der Aktuator ist z. B. ausgebildet, um mittels der Stößelplatte 32 den jeweiligen Kolben 12 in Richtung der jeweiligen Ausgabeöffnung 16 zu bewegen, um durch diese die in dem jeweiligen Probengefäß 10 angeordnete Flüssigkeit auszugeben. Durch die Relativbewegung wird die jeweilige Flüssigkeit aus dem jeweiligen Probengefäß 10 herausgedrückt.

Bei der in Fig. 3 dargestellten Ausführungsform handelt es sich beispielsweise um eine automatisierte Probeneingabe in ein 24-well-plate Format mittels einer Stößelplatte 32. Dabei ist anzumerken, dass die Vorrichtung 1 auch für größere oder kleinere Formate realisiert werden kann, z. B. indem eine Stößelplatte 32 mit einer größeren oder kleineren Anzahl von Stößeln 33 bereitgestellt wird und eine Halterung 20 zur Aufnahme einer entsprechenden Anzahl von Probengefäßen 10 bereitgestellt wird.

Von vierundzwanzig Probengefäßen 10 mit Kolben 12, bei denen über die Bewegung des jeweiligen Kolbens 12 ein Unterdruck in dem jeweiligen Probengefäß 10 erzeugt wurde und somit Flüssigkeiten 2, wie z. B. Patientenproben, eingesogen worden sind, siehe z. B. Fig. 2, wird der Deckel 18, z. B. auf der gegenüberliegenden Seite, z. B. einer dem Kolben 12 gegenüberliegenden Seite, entfernt und kopfüber in eine Halterung 20 in 6x4-Anordnung (24-well-plate Format) eingesetzt. Die bestückte Halterung 20 wird über das Zielgefäß 50 (hier: eine 24-well-plate) positioniert und danach ausgerichtet, sodass sich die Ausgabeöffnungen 16 der Probengefäße 10 exakt über den Kavitäten 52 des Zielgefäßes 50 befinden.

Eine Stößelplatte 32 mit vierundzwanzig einzelnen Stößeln 33 in 6x4-Anordnung (ebenfalls 24-well-plate Format), wird über die bestückte Halterung 20 positioniert und danach ausgerichtet, sodass die Enden der Stößel 33 an den in den Probengefäßen 10 integrierten Kolben 12 anliegen. Durch Absenken der Stößelplatte 32 wird über die Stößel 33 eine mechanische Kraft simultan auf die 24 Kolben 12 ausgeübt, wodurch eine Verdrängung der Flüssigkeiten 2, z. B. der flüssigen Patientenproben, stattfindet und diese in die darunterliegenden Kavitäten 52 des Zielgefäßes 50 fließen.

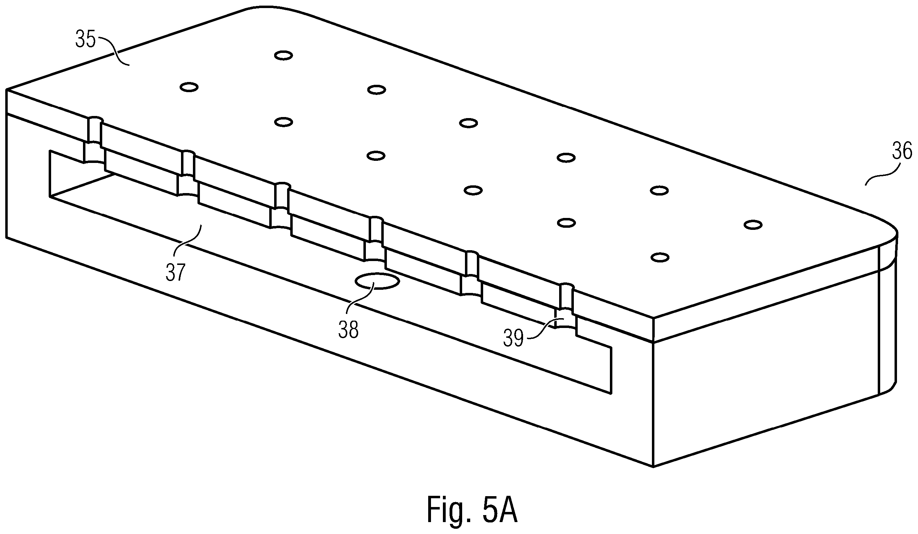

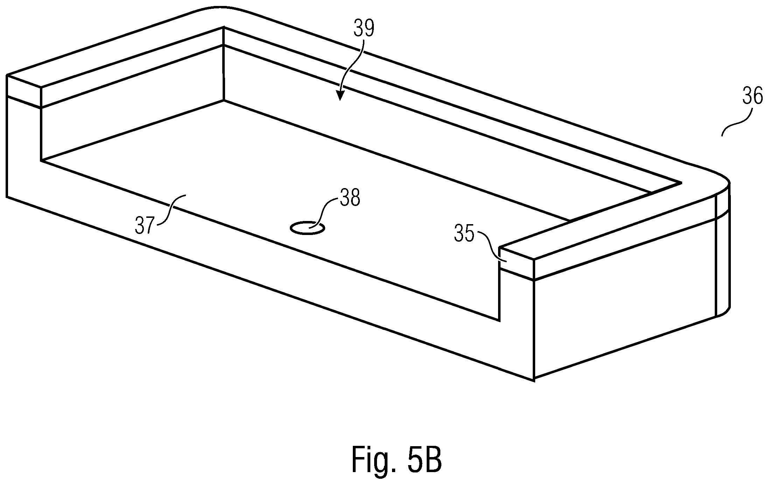

Fig. 4 zeigt ein zweites Ausführungsbeispiel der vorliegenden Erfindung, bei dem die Fluidextraktionseinheit 30 der Vorrichtung 1 eine Drucklufteinheit 36 aufweist. Detailansichten zweier alternativer Drucklufteinheiten 36 sind in Fig. 5a und Fig. 5b dargestellt. Fig. 5a und Fig. 5b zeigen jeweils einen Querschnitt durch die jeweilige Drucklufteinheit 36. Die Vorrichtung 1 gemäß Fig. 1 kann Merkmale und/oder Funktionalitäten, wie sie in Zusammenhang mit Fig. 4, Fig. 5a und Fig. 5b beschrieben sind aufweisen.

Die Drucklufteinheit 36 der Fluidextraktionseinheit 30 weist beispielsweise einen Hohlkörper, z. B. einen monolithischen Hohlkörper, mit einem Druckluftanschluss 38 und zumindest einer Druckluftauslassöffnung 39 auf. Fig. 5a zeigt beispielhaft eine Drucklufteinheit 36 mit einer Mehrzahl von Druckluftauslassöffnungen 39 und Fig. 5b zeigt beispielhaft eine Drucklufteinheit 36 mit einer einzigen Druckluftauslassöffnung 39. Die zumindest eine Druckluftauslassöffnung 39 kann auch als Druckluftdurchlassöffnung oder Druckluftdurchlassloch bezeichnet werden.

Der Druckluftanschluss 38 wird z. B. durch eine Öffnung zu einem Hohlraum 37 des Hohlkörpers gebildet und die zumindest eine Druckluftauslassöffnung 39 wird z. B. durch zumindest eine Öffnung zu dem Hohlraum 37 des Hohlkörpers gebildet. Vorzugsweise ist der Druckluftanschluss 38 auf einer der zumindest einen Druckluftauslassöffnung 39 gegenüberliegenden Seite des Hohlkörpers angeordnet. Alternativ kann der Druckluftanschluss 38 in einer zu der Seite mit der zumindest einen Druckluftauslassöffnung 39 senkrechten Seite des Hohlkörpers angeordnet sein, d.h., in einer der Seitenwände des Hohlkörpers. Fig. 5b zeigt exemplarisch, ein Druckluftauslassöffnung 39, die eine komplette Seite des Hohlkörpers überspannt, d. h. dass die Druckluftauslassöffnung 39 von den Seitenwänden des Hohlkörpers begrenzt ist. Die in Fig. 5b dargestellte Drucklufteinheit 36 kann beispielsweise als Körper, z. B. ein Quader, ein Würfel, ein Zylinder oder ein Kugelsegment, mit einer Ausnehmung, siehe den Hohlraum 37, und einer zu der Ausnehmung führenden Öffnung, siehe den Druckluftanschluss 38, angesehen werden. Die Ausnehmung der Drucklufteinheit 36 ist z. B. ausgebildet, um alle in der Halterung 20 aufnehmbaren Probengefäße 10 zu überspannen. Die zumindest eine Druckluftauslassöffnung 39 bzw. die Ausnehmung der Drucklufteinheit 36 ist z. B. der Halterung 20 der Vorrichtung 1 zugewandt angeordnet bzw. eine Handhabungsvorrichtung 40 der Vorrichtung 1 kann ausgebildet sein, um die Drucklufteinheit 36 so auszurichten, dass die zumindest eine Druckluftauslassöffnung 39 bzw. die Ausnehmung der Drucklufteinheit 36 der Halterung 20 der Vorrichtung 1 zugewandt angeordnet ist.

Wenn über den Druckluftanschluss 38 Druckluft in den Hohlraum 37 geführt wird, tritt aus der zumindest einen Druckluftauslassöffnung 39 Druckluft aus. In dem Ausführungsbeispiel in Fig. 5a wird gleichzeitig über eine Mehrzahl von Druckluftauslassöffnungen gezielt Druckluft bereitgestellt und in Fig. 5b wird über die eine Druckluftauslassöffnung ein Bereich mit Druckluft beaufschlagt. Somit kann die Druckluft gleichzeitig an den Betätigungsfenstern 14 der Mehrzahl von Probengefäßen 10 angelegt werden, um die Kolben 12 der Probengefäße 10 mittels der Druckluft zu betätigen. Die Fluidextraktionseinheit 30 ist z. B. ausgebildet, um die Druckluft über den Druckluftanschluss 38 in den Hohlkörper zu führen.

Fig. 5a zeigt eine Drucklufteinheit 36 mit einer Mehrzahl von Druckluftauslassöffnungen. Eine relative Anordnung der Mehrzahl von Druckluftauslassöffnungen 39 zueinander entspricht einer durch die Halterung 20 vorgegebenen relativen Anordnung der Mehrzahl von Probengefäßen 10 zueinander. Fig. 4 und Fig. 5a zeigen beispielhaft eine Array-Anordnung, bei der die Mehrzahl von Druckluftauslassöffnungen 39 und die Mehrzahl von Probengefäßen 10 in Reihen und Spalten angeordnet sind. Zueinander benachbarte Druckluftauslassöffnungen 39 innerhalb einer Reihe und/oder innerhalb einer Spalte weisen z. B. den gleichen Abstand zueinander auf. Zum Beispiel ein Abstand, d.h. ein Mittenabstand, zwischen zwei benachbarten Druckluftauslassöffnungen 39 der Drucklufteinheit 36 entspricht einem Abstand, d.h. einem Mittenabstand, zwischen zwei korrespondierenden von der Halterung 20 vorgegebenen Positionen benachbarter Probengefäße 10. Eine Anzahl der Mehrzahl von Druckluftauslassöffnungen 39 entspricht beispielsweise einer durch die Halterung 20 der Vorrichtung 1 vorgegebenen Anzahl an aufnehmbaren Probengefäßen 10.

Gemäß einem Ausführungsbeispiel sind die Druckluftauslassöffnungen 39 maximal so groß, wie die Betätigungsfenster 14 der Probengefäße 10. Die Druckluftauslassöffnungen 39 und die Betätigungsfenster 14 weisen beispielhaft korrespondierende Abmessungen auf. Die Druckluftauslassöffnungen 39 sind vorzugsweise kleiner, z. B. mit geringerem Durchmesser, als die Betätigungsfenster 14 ausgebildet. Optional kann die Drucklufteinheit 36 eine Dichtungseinheit 35 aufweisen, die ausgebildet ist, um Spalten zwischen den Druckluftauslassöffnungen 39 und den Betätigungsfenstern 14 der Probengefäße 10 abzudichten. Je nach Ausbildung der Dichtungseinheit 35 können die Druckluftauslassöffnungen 39 auch größere Abmessungen als die Betätigungsfenster 14 der Probengefäße 10 aufweisen.

Die Druckluftauslassöffnungen 39 der Drucklufteinheit 36 sind beispielsweise mit den Betätigungsfenstern 14 der Mehrzahl von Probengefäßen 10 ausrichtbar. Die Vorrichtung 1 weist beispielsweise eine Handhabungsvorrichtung 40 auf, die ausgebildet ist, um die Drucklufteinheit 36 mit der Halterung 20 auszurichten, z. B. so, dass jede der Mehrzahl von Druckluftauslassöffnungen 39 mit einem zugehörigen Betätigungsfenster 14 eines Probengefäßes 10 der Mehrzahl von Probengefäßen 10 ausgerichtet ist. Eine Druckluftdurchlassöffnung 39 und ein zugehöriges Betätigungsfenster 14 sind beispielsweise auf einer gemeinsamen Achse, z. B. einer Achse senkrecht zu einer Oberfläche des Hohlkörpers, in der die Mehrzahl von Druckluftauslassöffnungen 39 angeordnet sind, angeordnet bzw. miteinander ausgerichtet. Für die Ausrichtung der Drucklufteinheit 36 mit der Halterung 20 kann beispielsweise die Drucklufteinheit 36 und/oder die Halterung 20 bewegt werden.

Ist die Drucklufteinheit 36 mit der Halterung 20 ausgerichtet, kann beispielsweise die Fluidextraktionseinheit 30 Druckluft über den Druckluftanschluss 38 an den Hohlkörper anlegen, d.h. dem Hohlraum 37 des Hohlkörpers zuführen, um in jedem der Mehrzahl von Probengefäßen 10 den jeweiligen Kolben 12, mittels der über die jeweils zugeordnete Druckluftdurchlassöffnung 39 zugeführte Druckluft, zu betätigen. Mittels der Druckluft wird eine Kraft auf die Kolben 12 aufgewendet, so dass die Kolben von dem jeweiligen Betätigungsfenster 14 wegbewegt werden. Die Kolben 12 werden mittels der Druckluft in Richtung der jeweiligen Ausgabeöffnung 16 bewegt um durch diese die in dem jeweiligen Probengefäß 10 befindliche Flüssigkeit auszugeben bzw. herauszudrücken.

Gemäß einem Ausführungsbeispiel weist die Drucklufteinheit 36 eine Dichtungseinheit 35 auf. Die Dichtungseinheit 35 ist ausgebildet, um beispielsweise Spalten zwischen der Drucklufteinheit 36 und den in der Halterung 20 aufnehmbaren Probengefäßen 10 abzudichten. Die Handhabungsvorrichtung 40 der Vorrichtung 1 oder ein Aktuator der Fluidextraktionseinheit 30 ist z. B. ausgebildet, um eine Relativbewegung zwischen der Drucklufteinheit 36 und den Probengefäßen 10 zu bewirken, um die Drucklufteinheit 36 mit der Mehrzahl von Probengefäßen 10 in Kontakt zu bringen, wobei Kontaktflächen zwischen den Probengefäßen 10 und der Drucklufteinheit 36 mittels der Dichtungseinheit 35 abgedichtet sind.

In dem in Fig. 5a dargestellten Ausführungsbeispiel ist die Dichtungseinheit 35 an dem Hohlkörper auf einer Seite bzw. Oberfläche angeordnet, die die Mehrzahl von Druckluftauslassöffnungen 39 aufweist. Die Dichtungseinheit 35 weist beispielsweise zumindest um jede der Mehrzahl von Druckluftauslassöffnungen 39 einen Dichtungsbereich auf. Jeder der Dichtungsbereiche weist z. B. ein Dichtungsmaterial auf. Die Dichtungsbereiche können voneinander getrennt angeordnet sein, oder miteinander verbunden sein. Die Dichtungseinheit kann z. B. in Form einer Dichtungsschicht bzw. Dichtungsmatte mit Dichtungsmaterial vorliegen. Die Dichtungsschicht bzw. Dichtungsmatte weist z. B. für jede der Mehrzahl von Druckluftauslassöffnungen 39 eine korrespondierende Ausnehmung, z. B. eine Öffnung oder ein Loch, auf. Die Ausnehmungen in der Dichtungsschicht sind mit den Druckluftauslassöffnungen 39 ausgerichtet.

Wie in Fig. 5b gezeigt, kann die Drucklufteinheit 36 alternativ eine einzige Druckluftauslassöffnung 39 aufweisen. Die Druckluftauslassöffnung 39 ist ausgebildet, um alle in der Halterung 20 aufnehmbaren Probengefäße 10 zu überspannen. In Fig. 5b ist der Hohlraum 37 beispielsweise einseitig komplett geöffnet, d.h. Abmessungen der Druckluftauslassöffnung 39 entsprechen Abmessungen des Hohlraumes parallel zu der Ebene in der die Druckluftauslassöffnung 39 angeordnet ist. Wie bereits oben erwähnt, kann die Drucklufteinheit 36 beispielsweise einen Basiskörper mit einer Ausnehmung, siehe den Hohlraum 37, und einem zu der Ausnehmung führenden Druckluftanschluss 38 aufweisen. Die Ausnehmung ist beispielsweise ausgebildet, um über die Halterung 20 der Vorrichtung 1 bzw. über die in der Halterung aufnehmbaren Probengefäße gestülpt zu werden.

Die Handhabungsvorrichtung 40 der Vorrichtung 1 kann ausgebildet sein, um die Druckluftauslassöffnung 39 mit der Halterung 20 auszurichten und/oder die Drucklufteinheit 36 mit der Halterung 20 in Kontakt zu bringen. Ist die Drucklufteinheit 36 mit der Halterung 20 ausgerichtet und/oder in Kontakt, kann beispielsweise die Fluidextraktionseinheit 30 Druckluft über den Druckluftanschluss 38 an die Drucklufteinheit 36 anlegen, um einen Raum über der Halterung 20, bzw. den Probengefäßen 10, mit Druckluft zu beaufschlagen, um in jedem der Mehrzahl von Probengefäßen 10 den jeweiligen Kolben 12, mittels der Druckluft zu betätigen. Bei dem mit der Druckluft beaufschlagten Raum handelt es sich z. B. um einen luftdichten Raum zwischen der Halterung 20 und der Drucklufteinheit 36. Die Halterung 20 ist z. B. ausgebildet, um die Probengefäße 10 so aufzunehmen, dass deren Betätigungsfenster 14 dem luftdichten Raum zugewandt angeordnet sind. Mittels der Druckluft wird eine Kraft auf die Kolben 12 aufgewendet, so dass der jeweilige Kolben von dem jeweiligen Betätigungsfenster 14 wegbewegt wird. Der jeweilige Kolben 12 wird mittels der Druckluft in Richtung der jeweiligen Ausgabeöffnung 16 bewegt, um durch diese die in dem jeweiligen Probengefäß 10 befindliche Flüssigkeit auszugeben bzw. herauszudrücken.

Gemäß einem Ausführungsbeispiel weist die Drucklufteinheit 36 eine Dichtungseinheit 35 auf. Die Dichtungseinheit 35 ist ausgebildet, um beispielsweise Spalten zwischen der Drucklufteinheit 36 und der Halterung 20 abzudichten. Die Dichtungseinheit 35 umgibt bzw. umrandet z. B: einmal komplett die Druckluftauslassöffnung 39, z. B. wie ein Dichtungsring. Die Dichtungseinheit 35 ist z. B. in Form einer Schicht mit Dichtungsmaterial auf Seitenwänden des Hohlkörpers, d.h. auf Wänden senkrecht zu einer Ebene, in der die Druckluftauslassöffnung 39 angeordnet ist, ausgebildet.

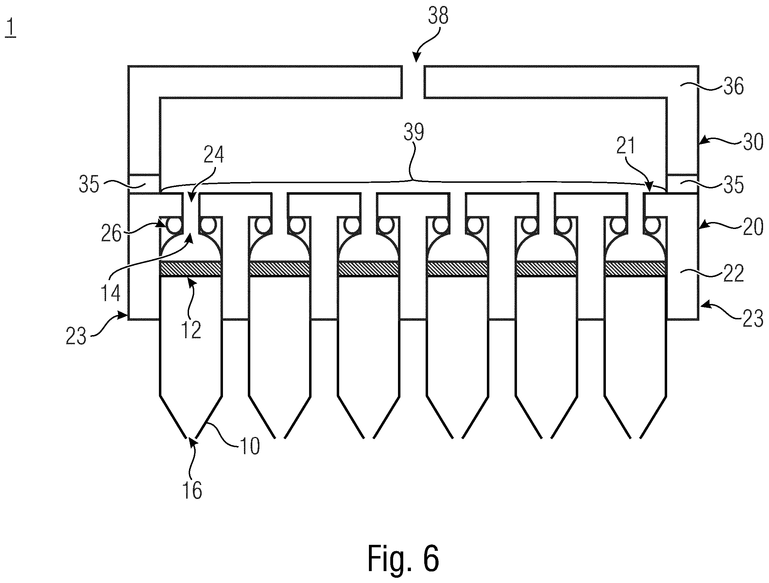

In Fig. 5b ist die Schicht mit Dichtungsmaterial beispielhaft auf einer Oberfläche des Hohlkörpers angeordnet, in der die Druckluftauslassöffnung 39 angeordnet ist. In diesem Fall ist die Drucklufteinheit 36 z. B. ausgebildet, um mit einer Oberfläche 21 der Halterung 20 in Kontakt gebracht zu werden, die parallel zu der Druckluftauslassöffnung 39 angeordnet ist. Wenn die Schicht mit Dichtungsmaterial der Dichtungseinheit 35 auf einer Oberfläche der Seitenwände des Hohlkörpers angeordnet ist, die Teil einer Oberfläche des Hohlkörpers ist, in der die Druckluftauslassöffnung 39 angeordnet ist, ist die Drucklufteinheit 36 ausgebildet, um mit der Oberfläche 21 der Halterung 20 in Kontakt gebracht zu werden, in der z. B. Ausnehmungen zur Aufnahme der Probengefäße 10 angeordnet sind (siehe Fig. 4) oder in der z. B. Öffnungen 24 zu Betätigungsfenstern 14 von aufnehmbaren Probengefäßen 10 angeordnet sind (siehe Fig. 6). Bei dem Kontakt zwischen der Drucklufteinheit 36 und der Halterung 20 umranden bzw. umgeben z. B. Seitenwände der des Hohlkörpers und/oder die Dichtungseinheit 35 der Drucklufteinheit 36, einen Bereich auf der Oberfläche 21, in dem die Ausnehmungen zur Aufnahme der Probengefäße 10 angeordnet sind (siehe Fig. 4) oder in dem die Öffnungen 24 zu den Betätigungsfenstern 14 angeordnet sind (siehe Fig. 6).

Alternativ kann die Schicht mit Dichtungsmaterial auf Flächen der Seitenwände des Hohlkörpers angeordnet sein, die dem Hohlraum 37 zugewandt sind. In diesem Fall ist die Drucklufteinheit 36 z. B. ausgebildet, um mit Oberflächen 23 der Halterung 20 in Kontakt gebracht zu werden, die parallel zu den Seitenwänden des Hohlkörpers angeordnet sind, d.h. die senkrecht zu einer Ebene, in der die Druckluftauslassöffnung 39 angeordnet ist, verlaufen. Bei den Oberflächen 23 der Halterung 20 handelt es sich beispielsweise um Außenseitenflächen der Halterung 20. Bei dem Kontakt zwischen der Drucklufteinheit 36 und der Halterung 20 umranden bzw. umgeben z. B. Seitenwände des Hohlkörpers und/oder die Dichtungseinheit 35 der Drucklufteinheit 36, Außenwände der Halterung 20, d.h. Oberflächen von Wänden die senkrecht zu einer Ebene angeordnet sind, in der die Probengefäßen mittels der Halterung 20 relative zueinander positioniert werden können, wobei die Oberflächen von den aufnehmbaren Probengefäßen 10 abgewandt angeordnet sind.

Die Handhabungsvorrichtung 40 der Vorrichtung 1 oder ein Aktuator der Fluidextraktionseinheit 30 ist z. B. ausgebildet, um eine Relativbewegung zwischen der Drucklufteinheit 36 und der Halterung 20 zu bewirken, um die Drucklufteinheit 36 mit der Halterung 20 in Kontakt zu bringen, wobei Kontaktflächen zwischen der Halterung 20 und der Drucklufteinheit 36 mittels der Dichtungseinheit 35 abgedichtet sind. Die Halterungen 20 in Fig. 4 und Fig. 6 sind z. B. ausgebildet, um die Mehrzahl von Probengefäßen 10 so aufzunehmen, dass die Betätigungsfenster 14 der Probengefäße 10 der Drucklufteinheit 36 zugewandt angeordnet sind (zumindest bei Kontakt der Drucklufteinheit 36 mit der Halterung 20). Zum Beispiel in Fig. 4 ist die Halterung 20 ausgebildet, um die Mehrzahl von Probengefäßen 10 in den Ausnehmungen der Oberfläche 21 so aufzunehmen, dass die Betätigungsfenster 14 der Probengefäße 10 der Drucklufteinheit 36 zugewandt angeordnet sind und z. B. in Fig. 6 ist die Halterung 20 ausgebildet, um die Mehrzahl von Probengefäßen 10 so aufzunehmen, dass die Betätigungsfenster 14 der Probengefäße 10 über Druckluftdurchlassöffnungen 24 der Halterung 20 mit einem von der Drucklufteinheit 36 über der Halterung 20 aufgespannten Raum fluidisch gekoppelt sind (beides gilt zumindest bei Kontakt der Drucklufteinheit 36 mit der Halterung 20).

Die Handhabungsvorrichtung 40 der Vorrichtung 1 oder der Aktuator der Fluidextraktionseinheit 30 ist z. B. ausgebildet, um die Drucklufteinheit 36 so mit der Halterung 20 in Kontakt zu bringen, dass ein Raum um die Betätigungsfenster 14 der Mehrzahl von Probengefäßen 10 derart abgeschlossen ist, dass nur über den Druckluftanschluss 38 ein (fluidischer) Zugang zu dem Raum um die Betätigungsfenster 14 besteht, d.h. dass ein luftdichter Raum zwischen der Drucklufteinheit 36 und der Halterung 20 gebildet wird. Bei einer Drucklufteinheit 36 mit einer einzigen Druckluftauslassöffnung 39 kann über den Druckluftanschluss 38 der gesamte Raum über den Probengefäßen 10, d.h., um die Betätigungsfenster 14 der Mehrzahl von Probengefäßen 10 herum, mit Druckluft beaufschlagt werden.

Optional weist die Halterung 20 in Fig. 4 Dichtungseinheiten auf, die ausgebildet sind, um Spalten bzw. Zwischenräume zwischen der jeweiligen Ausnehmung in der Oberfläche 21 und dem jeweiligen Probengefäß 10 abzudichten. Die spezielle Halterung 20 aus Fig. 6 wird im Folgenden noch detailliert beschrieben.

Bei der in Fig. 4 dargestellten Ausführungsform, z. B. mit einer der Drucklufteinheiten 36 aus Fig. 5a oder Fig. 5b, handelt es sich beispielsweise um eine automatisierte Probeneingabe im 24-well-plate Format mittels positiven Drucks. Dabei ist anzumerken, dass die Vorrichtung 1 auch für größere oder kleinere Formate realisiert werden kann, z. B. indem eine Drucklufteinheit 36 mit einer größeren oder kleineren Anzahl von Druckluftauslassöffnungen 39 bereitgestellt wird und eine Halterung 20 zur Aufnahme einer entsprechenden Anzahl von Probengefäßen 10 bereitgestellt wird oder indem eine Drucklufteinheit 36 mit einer einzigen Druckluftauslassöffnung 39 mit größeren oder kleineren Abmessungen bereitgestellt wird.

Von vierundzwanzig Probengefäßen 10 mit Kolben 12, bei denen über die Bewegung des jeweiligen Kolbens 12 ein Unterdruck in dem jeweiligen Probengefäß 10 erzeugt wurde und somit Flüssigkeiten 2, wie z. B. Patientenproben, eingesogen worden sind, siehe z. B. Fig. 2, wird der Deckel 18 entfernt und kopfüber in eine Halterung 20 in 6x4-Anordnung (24-well-plate Format) eingesetzt. Die bestückte Halterung 20 wird über das Zielgefäß 50 (hier: eine 24-well-plate) positioniert und danach ausgerichtet, sodass sich die Ausgabeöffnungen 16 der Probengefäße 10 exakt über den Kavitäten 52 des Zielgefäßes 50 befinden.

Weist die Vorrichtung 1 aus Fig. 4 die Drucklufteinheit 36 aus Fig. 5b auf, so kann die Halterung 20 z. B. derart konzipiert sein, dass die Probengefäße 10 mit Kolben 12 luftdicht darin verankert sind, beispielsweise durch Dichtungen an den Hohlräumen der Halterung 20 in denen die Probengefäße 10 aufgenommen werden können.

Die Drucklufteinheit 36 kann auch als Druckdeckel bezeichnet werden. Die Drucklufteinheit 36 weist z. B. vierundzwanzig einzelne Druckluftauslassöffnungen 39 in 6x4-Anordnung (ebenfalls 24-well-plate Format) auf, siehe Fig. 5a, oder eine einzige Druckluftauslassöffnung 93 auf, die die 6x4 Probenaufnahmeanordnung der Halterung 20 überspannt. Die Drucklufteinheit 36 wird z. B. über die bestückte Halterung 20 positioniert und danach ausgerichtet, sodass die Druckluftauslassöffnungen 39 exakt über den in den Probengefäßen 10 integrierten Kolben 12 justiert sind oder, sodass ein gemeinsamer Raum über den in den Probengefäßen 10 integrierten Kolben 12 von einer Drucklufteinheit mit einer einzigen Druckluftauslassöffnung 39 begrenzt bzw. abgedichtet ist. In anderen Worten, wird im Falle der Drucklufteinheit 36 aus Fig. 5b z. B. der Druckdeckel über die bestückte Halterung 20 gestülpt, sodass zwischen Druckdeckel und Halterung 20 ein luftdichter Raum entsteht. Die Drucklufteinheit 36 weist z. B. einen Hohlkörper bzw. ein Basisstück, das einen Hohlraum 37 aufweist, einen Druckanschluss, z. B. den Druckluftanschluss 38, z. B. zumindest eine Druckluftauslassöffnung 39, als auch einen Dichtungsaufsatz, z. B. die Dichtungseinheit 35, auf. Im Falle des Ausführungsbeispiels gemäß Fig. 5a, ist die Dichtungseinheit 35 beispielsweise als Dichtungsmatte mit zu den Druckluftdurchlassöffnungen 39 korrespondierenden Öffnungen ausgebildet, und im Falle des Ausführungsbeispiels gemäß Fig. 5b, ist die Dichtungseinheit 35 beispielsweise entlang des Deckelrandes angeordnet. Durch ein Andrücken der Drucklufteinheit 36 an die Probengefäße 10 (z. B. bei der Drucklufteinheit 36 gemäß Fig. 5a) oder durch ein Andrücken der Drucklufteinheit 36 an die Halterung 20 (z. B. bei der Drucklufteinheit 36 gemäß Fig. 5b) und durch ein Beaufschlagen der Kolben 12 mit der Druckluft wird eine Kraft simultan auf die 24 Kolben 12 ausgeübt, wodurch eine Verdrängung der Flüssigkeiten 2, z. B. der flüssigen Patientenproben, stattfindet und diese in die darunterliegenden Kavitäten 52 des Zielgefäßes 50 fließen.

Ziel der hierin in Zusammenhang mit Fig. 1, Fig. 3, Fig. 4 und Fig. 6 beschriebenen Erfindung ist es, Flüssigkeiten 2, wie z. B. flüssige Patientenproben, die sich in Probengefäßen 10 mit Kolben 12 befinden, in die Zielgefäße 50 einzugeben. Bei den Zielgefäßen handelt es sich z. B. um Gefäße für eine Weiterverarbeitung der Flüssigkeiten 2, wie z. B. Gefäße eines Geräts zur Probenaufbereitung.

Wie in Fig. 3 und 4 dargestellt kann die Vorrichtung 1 eine Halterung 20 aufweisen, die ausgebildet ist, um eine Mehrzahl von Probengefäßen 10 aufzunehmen und zu positionieren. Auf einer Seite der Halterung 20 sind die Betätigungsfenster 14 der Probengefäße 10 zugänglich und auf einer gegenüberliegenden Seite der Halterung 20 sind die Ausgabeöffnungen 16 der Probengefäße 10 zugänglich. Die Halterung 20 ist z. B. ausgebildet, um die Mehrzahl von Probengefäßen 10 so aufzunehmen, dass die Betätigungsfenster 14 der Probengefäße 10 in einer Ebene angeordnet sind. Die Halterung 20 ist z. B. ausgebildet, um die Probengefäße 10 so zu positionieren, dass die Betätigungsfenster 14 der Probengefäße 10 der Fluidextraktionseinheit 30, z. B. der Stößelplatte 32 oder der Drucklufteinheit 36 der Fluidextraktionseinheit 30, zugewandt angeordnet sind. Die Betätigungsfenster 14 sind z. B. den Stößeln 33 der Stößelplatte 32 (siehe Fig. 3) oder der zumindest einen Druckluftauslassöffnung 39 der Drucklufteinheit 36 (siehe Fig. 4) zugewandt angeordnet. Optional kann die Handhabungsvorrichtung 40 der Vorrichtung 1 ausgebildet sein, um eine Relativbewegung zwischen der Halterung 20 und der Stößelplatte 32 oder der Drucklufteinheit 36 zu bewirken, so dass die Betätigungsfenster 14 der Probengefäße 10 der Fluidextraktionseinheit 30 zugewandt angeordnet sind. Die Handhabungsvorrichtung 40 ist z. B. ausgebildet, um die Halterung 20 und/oder die Stößelplatte 32 oder die Halterung 20 und/oder die Drucklufteinheit 36 zu bewegen.

Die Halterung 20 ist z. B. ausgebildet, um die Mehrzahl von Probengefäßen 10 in einer zweidimensionalen Anordnung zu positionieren. In Fig. 3 und 4 ist exemplarisch eine Array-Anordnung gezeigt, bei der die Probengefäße 10 in Reihen und Spalten angeordnet sind.

Eine durch die Halterung 20 definierte Anordnung der Mehrzahl von Probengefäßen 10 ist beispielsweise auf eine Anordnung der Stößel 33 der Stößelplatte 32 (siehe Fig. 3) oder auf eine Anordnung der Mehrzahl von Druckluftauslassöffnungen 39 der Drucklufteinheit 36 (siehe Fig. 5a) abgestimmt. Sowohl die durch die Halterung 20 definierte Anordnung der Mehrzahl von Probengefäßen 10 als auch die Anordnung der Stößel 33 der Stößelplatte 32 (siehe Fig. 3) oder die Anordnung der Mehrzahl von Druckluftauslassöffnungen 39 der Drucklufteinheit 36 (siehe Fig. 5a) sind beispielsweise auf eine Anordnung von Kavitäten 52 in einem Zielgefäß 50 abgestimmt.

Die Handhabungsvorrichtung 40 der Vorrichtung 1 kann ausgebildet sein, um das Zielgefäß 50 oder eine Mehrzahl von Zielgefäßen, die Halterung 20 und die Stößelplatte 32 oder die Drucklufteinheit 36 miteinander auszurichten.

Den Probengefäßen 10 mit Kolben 12, bei denen über die Bewegung des Kolbens 4 ein Unterdruck im jeweiligen Gefäß erzeugt wurde und somit eine Flüssigkeit 2, wie z. B. eine Patientenprobe, eingesogen worden ist, wird z. B. der jeweilige Deckel 18 entfernt und kopfüber in eine Halterung 20 eingesetzt. Die Halterung 20 entspricht z. B. dem Format des Zielgefäßes 50, d. h. sie ist derart konzipiert, dass sich bei entsprechender Justage die Öffnungen, d.h. die Ausgabeöffnungen 16, der Probengefäße 10 exakt über den Öffnungen der Zielgefäße, d.h. über den Kavitäten 52 des Zielgefäßes 50, befinden. Mit Hilfe einer ebenfalls auf das Format ausgelegten Stößelplatte 32, oder mit Hilfe von positivem Druck, der z. B. durch Druckluft von einer auf das Format ausgelegten Drucklufteinheit 36 bereitgestellt wird, werden die in den Probengefäßen 10 integrierten Kolben 12 in Richtung eines Flusspfads, z. B. in Richtung der Ausgabeöffnungen 16, z. B. nach unten, bewegt, wodurch eine Verdrängung der jeweiligen Flüssigkeit 2, z. B. der flüssigen Patientenprobe, stattfindet und diese in das Zielgefäß 50 fließt.

Wie oben beschrieben kann eine Vorrichtung gemäß Fig. 1 oder Fig. 4 die Drucklufteinheit 36 aus Fig. 5b aufweisen. Fig. 6 zeigt eine Vorrichtung 1, die ebenfalls die Drucklufteinheit 36 aus Fig. 5b aufweist. Wie oben beschrieben kann die Fluidextraktionseinheit 30 einer hierin beschriebenen Vorrichtung 1 eine Drucklufteinheit 36 aufweisen, die einen Hohlraum aufweist und die ausgebildet ist, um einen Raum über den Probengefäßen 10 mit Druckluft zu beaufschlagen. Die Vorrichtung 1 gemäß Fig. 1 oder Fig. 4 kann Merkmale und/oder Funktionalitäten, wie sie in Zusammenhang mit Fig. 6 beschrieben sind aufweisen.

Die in Fig. 6 beispielhaft gezeigte Drucklufteinheit 36 weist einen Druckluftanschluss 38, eine Druckluftauslassöffnung 39 und z. B. eine Dichtungseinheit 35 auf (vergleiche Fig. 5b). Ein Querschnitt der Drucklufteinheit 36 ist z. B. U-förmig, wobei in einer der Wände oder in einem Boden der U-förmigen Drucklufteinheit 36 der Druckluftanschluss 38 angeordnet ist und ein offener Teil der U-förmigen Drucklufteinheit 36 die Druckluftauslassöffnung 39 bildet. An einer dem Boden abgewandten Oberfläche der Seitenwände der U-förmigen Drucklufteinheit 36 ist z. B. die Dichtungseinheit 35 angeordnet.

Alternativ wird die Drucklufteinheit 36 durch eine Platte gebildet in der eine Ausnehmung bzw. Öffnung angeordnet ist, die den Druckluftanschluss 38 bildet, und auf der eine Dichtungseinheit 35 angeordnet ist. Die Dichtungseinheit 35 verläuft z. B. entlang eines kompletten Randes einer Oberfläche der Platte, wobei in der Oberfläche der Druckluftanschluss 38 angeordnet ist. Ein Bereich der Oberfläche ist durch die Dichtungseinheit 35 begrenzt. Abmessungen des Bereichs sind derart ausgebildet, dass zumindest alle Öffnungen 24 in der Halterung 20 von dem Bereich überspannt sind.

Die Dichtungseinheit 35 ist ausgebildet, um Spalten bzw. Schlitze zwischen der Drucklufteinheit 36 und einer Halterungseinheit 22 der Halterung 20 abzudichten.

Für derartige Drucklufteinheiten 36 weist die Halterung 20 z. B. eine Halterungseinheit 22 auf, die ausgebildet ist, um Enden der Mehrzahl von Probengefäßen 10 aufzunehmen, wobei die Enden jeweils das Betätigungsfenster 14 des jeweiligen Probengefäßes 10 aufweisen. Die Halterungseinheit 22 weist in einer Oberfläche, die den Betätigungsfenstern 14 zugewandt angeordnet ist, eine Mehrzahl von Öffnungen 24, z. B. Druckluftdurchlassöffnungen, auf. Die Halterungseinheit 22 ist so ausgebildet, dass jede der Öffnungen 24 mit einem Betätigungsfenster 14 eines in der Halterung aufnehmbaren Probengefäßes 10 ausgerichtet ist. D. h. eine relative Anordnung der Mehrzahl von Druckluftdurchlassöffnungen 24 zueinander entspricht z. B. einer durch die Halterung 20 vorgegebenen relativen Anordnung der Mehrzahl von Probengefäßen 10 zueinander. Die Halterungseinheit 22 weist ferner z. B. eine oder mehrere Dichtungseinheiten 26 auf, die ausgebildet ist/sind, um Spalten bzw. Schlitze zwischen der Halterungseinheit 22 und den darin aufnehmbaren Probengefäßen 10, bzw. zwischen jeder der Öffnungen 26 der Halterungseinheit und einem jeweils zugeordneten Betätigungsfenster 14 eines in der Halterung aufnehmbaren Probengefäßes 10, abzudichten. Die in Fig. 6 dargestellt Halterungseinheit 22 weist beispielsweise um jede der Mehrzahl von Öffnungen 24 eine Dichtungseinheit 26 auf, wobei die Dichtungseinheiten 26 an der Oberfläche, die den Betätigungsfenstern 14 der in der Halterung 20 aufnehmbaren Probengefäßen 10 zugewandt angeordnet ist, angeordnet sind.

Die Druckluftauslassöffnung 39 ist z. B. ausgebildet, um alle Druckluftdurchlassöffnungen 24 der Mehrzahl von Druckluftdurchlassöffnungen 24 zu überspannen. Das heißt Abmessungen der Druckluftauslassöffnung 39 sind entsprechend ausgestaltet.

Die Fluidextraktionseinheit 30 ist z. B. ausgebildet um eine Relativbewegung zwischen der Drucklufteinheit 36 und der Halterung 20 zu bewirken, um diese miteinander in Kontakt zu bringen, wobei Kontaktflächen zwischen der Drucklufteinheit 36 und der Halterung 20 z. B. mittels der Dichtungseinheit 35 abgedichtet sind. Ferner ist die Fluidextraktionseinheit 30 z. B. ausgebildet, um über den Druckluftanschluss 35 Druckluft bereitzustellen, wenn die Drucklufteinheit 36 und die Halterung 20 miteinander in Kontakt sind. Die Bereitgestellte Druckluft wird beispielsweise über die Mehrzahl von Öffnungen 24 zu den Kolben 12 der Probengefäße 10 geführt, um diese parallel zu betätigen und eine Flüssigkeit aus dem jeweiligen Probengefäß 10 auszugeben.

In anderen Worten zeigt Fig. 6 eine Vorrichtung 1 deren Halterung 20 eine Halterungseinheit 22 mit einer Mehrzahl von Druckluftdurchlassöffnungen 24 aufweist und deren Drucklufteinheit 36 eine Druckluftauslassöffnung 39 aufweist, die alle Druckluftdurchlassöffnungen 24 der Mehrzahl von Druckluftdurchlassöffnungen 24 überspannt.

Fig. 7 zeigt ein Blockdiagramm eines Verfahrens 100 zur parallelen Ausgabe von Flüssigkeiten aus einer Mehrzahl von Probengefäßen. Das Verfahren 100 umfasst ein Einfügen 110 der Mehrzahl von Probengefäßen in eine Halterung und ein Betätigen 120 einer Betätigungseinheit, durch das gleichzeitig und parallel ein Kolben in jedem der Mehrzahl von Probengefäßen betätigt wird, um eine Flüssigkeit aus jedem der Probengefäße auszugeben.

Bei der Betätigungseinheit kann es sich z. B. um eine hierin beschriebene Fluidextraktionseinheit 30 bzw. um eine Stößelplatte 32 oder um eine hierin beschriebene Drucklufteinheit 36 handeln. Die Betätigungseinheit weist z. B. eine Mehrzahl von Betätigungsmittel, wie z. B. die Stößel 33 der hierin beschriebenen Stößelplatte 32 oder die Druckluftauslassöffnungen 39 der hierin beschriebenen Drucklufteinheit 36, auf.

Die Betätigungseinheit wird z. B. mit der Halterung ausgerichtet. Dies geschieht z. B. bevor die Betätigungseinheit betätigt 120 wird. Bei dem Ausrichten werden beispielsweise die Betätigungsmittel der Betätigungseinheit auf Betätigungsfenster der Mehrzahl von Probengefäßen ausgerichtet. Dabei ist z. B. ein Betätigungsmittel einem der Betätigungsfenster zugeordnet. Diese Zuordnung zwischen den Betätigungsfenstern und den Betätigungsmitteln ist beispielsweise bijektiv oder injektiv. Es ist möglich, dass z. B. mehr Betätigungsmittel als Probengefäße vorliegen, wodurch z. B. nicht jedes Betätigungsmittel einem Betätigungsfenster zugeordnet ist, aber jedes Betätigungsfenster einem Betätigungsmittel zugeordnet ist.

Bei dem Betätigen 120 der Betätigungseinheit wird z. B. eine Stößelplatte mit einer Mehrzahl von Stößeln vertikal in Richtung der Mehrzahl von Probengefäßen bewegt, siehe auch die Beschreibung zu Fig. 3. Durch die Betätigungsfenster der Mehrzahl von Probengefäßen wird z. B. jeweils ein Stößel geführt, der einen Kolben des jeweiligen Probengefäßes betätigt. Der Kolben wird von dem jeweiligen Stößel von dem Betätigungsfenster weg in Richtung einer Ausgabeöffnung bewegt, durch die die in dem jeweiligen Probengefäß vorliegende Flüssigkeit ausgegeben wird.

Alternativ werden bei dem Betätigen 120 der Betätigungseinheit die Kolben der Mehrzahl von Probengefäßen mittels Druckluft betätigt, siehe z. B. die Beschreibung zu Fig. 4 bis 6.

Bei dem erfindungsgemäßen Verfahren 100 handelt es sich z. B. um ein Verfahren zum, z. B. kontaktlosen, Transfer einer Flüssigkeit, wie z. B. einer Probenflüssigkeit aus mindestens einem Ursprungsgefäß, z. B. einem hierin beschriebenen Probengefäß, in mindestens ein Zielgefäß indem eine Kraft, z. B. mechanisch oder per Druckluft, in Richtung des Flusspfades auf einen in dem Ursprungsgefäß befindlichen Kolben ausgeübt wird, die einen Flüssigkeitsfluss in Richtung des Flusspfades in das Zielgefäß bewirkt.

Das Ursprungsgefäß stellt z. B. ein Probengefäß mit integriertem Kolben dar, in das durch Aktuieren des Kolbens und dem dadurch entstehenden Unterdruck, eine Flüssigkeit, z. B. eine Patientenprobe, eingesogen werden kann.

Das Zielgefäß stellt z. B. ein beliebiges, üblicherweise für die Aufbewahrung oder Weiterverarbeitung von Flüssigkeiten verwendetes Gefäß dar, wie z. B. Probenröhrchen, Spritzen oder Platten (z. B. Titerplatten), die mit oder ohne Filter bestückt sind.

Die Kraft in Richtung des Flusspfads kann z. B. auf den im Ursprungsgefäß befindlichen Kolben mechanisch über z. B. einen Stößel oder über positiven Druck, z. B. per Druckluft, ausgeübt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden. Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden. Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen

[1] Lippi, G., Da Rin, G., "Advantages and limitations of total laboratory automation: a personal overview", Bd. 57, 2019
[2] De Capitani, D., Marocchi, A., Toliio, T., "Automation of the Pre-Analytical Phase: A Performance Evaluation of Alternative Scenarios", 2002
[3] Heinemann, Dr. André, "Patientenproben richtig versenden", [Online]. Erhältlich: https://www.bgw-online.de/resource/blob/18158/9177ca1f70a2239469677b912a2b 4750/bgaw09-19-011-patientenproben-data.pdf. [Zugriff am 16.05.2022].
[4] Thurm, V., Schoeller, A. et al., "Versand von medizinischem Untersuchungsmaterial", 2007. [Online]. Erhältlich: https://rki.de/DE/Content/Infekt/NRZ/Staphylokokken/hinweise/Versand2007 down load.pdf? blob=publicationFile. [Zugriff am 16.05.2022]
[5] Zaninotto, M., Plebani, M., "The "hospital central laboratory": automation, integration and clinical usefulness", Bd. 48, 2010
[6] MVZ Labor Krone GbR, "Präanalytik Allgemein", [Online]. Erhältlich: https://www.laborkrone.de/fuer-aerzte/praeanalvtik/#1449651831061-561 fed09-3f248496-1747. [Zugriff am 16.05.2022]
[7] Ritchart, K., "Strategien für mehr Nachhaltigkeit im Labor", [Online]. Erhältlich: https://www.fishersci.de/de/de/scientific-products/publications/lab-reporter/2022/ issue-1/stratgies-for-a-more-sustainable-lab.html. [Zugriff am 16.05.2022]
[8] Hirschfeld, M., Rücker, G. et al., "Urinary Exosomal MicroRNAs as Potential Noninvasive Biomarkers in Breast Cancer Detection", Bd. 24, 2020.
[9] F. Hoffman-LA ROCHE AG, "Probeneingabevorrichtung für die Eingabe medizinischer Proben in einen Analysator". Patent EP 1347282 B1, 17.05.2006

## Patentansprüche

1. Vorrichtung (1) zur parallelen Ausgabe von Flüssigkeiten (2) aus einer Mehrzahl von Probengefäßen (10), umfassend
eine Halterung (20) zur Aufnahme und Positionierung der Mehrzahl von Probengefäßen (10);
eine Fluidextraktionseinheit (30), die ausgebildet ist, um parallel in jedem der Mehrzahl von Probengefäßen (10) einen Kolben (12) zu betätigen, um eine Flüssigkeit (2) aus dem jeweiligen Probengefäß (10) auszugeben.

2. Vorrichtung (1) gemäß Anspruch 1, wobei die Fluidextraktionseinheit (30) einen Aktuator und eine Stößelplatte (32) mit einer Mehrzahl von Stößeln (33) aufweist, und wobei der Aktuator ausgebildet ist, um eine Relativbewegung zwischen der Stößelplatte (32) und den Probengefäßen (10) zu bewirken, um in jedem der Mehrzahl von Probengefäßen (10) den jeweiligen Kolben (12) mittels eines der Stößel (33) der Stößelplatte (32) zu betätigen.

3. Vorrichtung (1) gemäß Anspruch 2, wobei eine relative Anordnung der Mehrzahl von Stößeln (33) zueinander einer durch die Halterung (20) vorgegebenen relativen Anordnung der Mehrzahl von Probengefäßen (10) zueinander entspricht.

4. Vorrichtung (1) gemäß Anspruch 1, wobei die Fluidextraktionseinheit (30) eine Drucklufteinheit (36) aufweist, die ausgebildet ist, um Druckluft gleichzeitig an Betätigungsfenstern (14) der Mehrzahl von Probengefäßen (10) anzulegen, um die Kolben (12) mittels der Druckluft zu betätigen.

5. Vorrichtung (1) gemäß Anspruch 4, wobei die Drucklufteinheit (36) einen Hohlkörper mit einem Druckluftanschluss (38) und einer Mehrzahl von Druckluftauslassöffnungen (39) aufweist, und wobei eine relative Anordnung der Mehrzahl von Druckluftauslassöffnungen (39) zueinander einer durch die Halterung (20) vorgegebenen relativen Anordnung der Mehrzahl von Probengefäßen (10) zueinander entspricht.

6. Vorrichtung (1) gemäß Anspruch 5, wobei die Drucklufteinheit (36) auf einer Seite mit der Mehrzahl von Druckluftauslassöffnungen (39) eine Dichtungseinheit (35) aufweist, um Kontaktflächen zwischen der Drucklufteinheit (36) und den Probengefäßen (10) der Mehrzahl von Probengefäßen (10) abzudichten.

7. Vorrichtung (1) gemäß Anspruch 4, wobei die Drucklufteinheit (36) einen Basiskörper mit einer Ausnehmung und mit einem zu der Ausnehmung führenden Druckluftanschluss (38) aufweist, wobei die Ausnehmung ausgebildet ist, um alle in der Halterung (20) aufnehmbaren Probengefäße zu überspannen.

8. Vorrichtung (1) gemäß einem der Ansprüche 1 bis 7, mit einer Handhabungsvorrichtung (40), die ausgebildet ist, um die Halterung (20) und die Fluidextraktionseinheit (30) miteinander auszurichten.

9. Vorrichtung (1) gemäß Anspruch 8 in Rückbezug auf Anspruch 2 oder Anspruch 3, wobei die Handhabungsvorrichtung (40) ausgebildet ist, um bei der gegenseitigen Ausrichtung der Halterung (20) und der Fluidextraktionseinheit (30) jeden der Mehrzahl von Stößeln (33) mit einem entsprechenden Betätigungsfenster (14) eines Probengefäßes (10) der Mehrzahl von Probengefäßen (10) auszurichten.

10. Vorrichtung (1) gemäß Anspruch 8 in Rückbezug auf Anspruch 5 oder Anspruch 6, wobei die Handhabungsvorrichtung (40) ausgebildet ist, um bei der gegenseitigen Ausrichtung der Halterung (20) und der Fluidextraktionseinheit (30) jede der Mehrzahl von Druckluftauslassöffnungen (39) mit einem entsprechenden Betätigungsfenster (14) eines Probengefäßes (10) der Mehrzahl von Probengefäßen (10) auszurichten.

11. Vorrichtung (1) gemäß einem der Ansprüche 8 bis 10, wobei die Handhabungsvorrichtung (40) ferner ausgebildet ist, um die Halterung (20) und ein Zielgefäß (50) miteinander auszurichten.

12. Verfahren (100) zur parallelen Ausgabe von Flüssigkeiten aus einer Mehrzahl von Probengefäßen, umfassend
Einfügen (110) der Mehrzahl von Probengefäßen in eine Halterung;
Betätigen (120) einer Betätigungseinheit, durch das gleichzeitig und parallel ein Kolben in jedem der Mehrzahl von Probengefäßen betätigt wird, um eine Flüssigkeit aus jedem der Probengefäße auszugeben.

13. Verfahren (100) gemäß Anspruch 12, wobei bei dem Betätigen (120) der Betätigungseinheit eine Stößelplatte mit einer Mehrzahl von Stößeln vertikal in Richtung der Mehrzahl von Probengefäßen bewegt wird und jeder der Mehrzahl von Stößeln einen zugeordneten Kolben eines Probengefäßes der Mehrzahl von Probengefäßen betätigt.

14. Verfahren (100) gemäß Anspruch 12, wobei bei dem Betätigen (120) der Betätigungseinheit die Kolben der Mehrzahl von Probengefäßen mittels Druckluft betätigt werden.

15. Verfahren (100) gemäß einem der Ansprüche 12 bis 14, umfassend ein Ausrichten von Betätigungsmitteln, wie z. B. Stößel oder Druckluftöffnungen, der Betätigungseinheit mit Betätigungsfenstern der Mehrzahl von Probengefäßen.
